# EUROPÄISCHE PATENTSCHRIFT

(11) **EP 3 873 108 B1**
(45) Veröffentlichungstag und Bekanntmachung des Hinweises auf die Patenterteilung: **16.04.2025**
(21) Anmeldenummer: 21154349.1
(22) Anmeldetag: 29.01.2021
(51) Int. Cl.: H04R 25/00

(54) **HÖRSYSTEM MIT MINDESTENS EINEM IM ODER AM OHR DES NUTZERS GETRAGENEN HÖRINSTRUMENT SOWIE VERFAHREN ZUM BETRIEB EINES SOLCHEN HÖRSYSTEMS**
HEARING SYSTEM WITH AT LEAST ONE HEARING INSTRUMENT WORN IN OR ON THE EAR OF THE USER AND METHOD FOR OPERATING SUCH A HEARING SYSTEM
SYSTÈME AUDITIF POURVU D'AU MOINS UN INSTRUMENT AUDITIF PORTÉ DANS OU SUR L'OREILLE DE L'UTILISATEUR, AINSI QUE PROCÉDÉ DE FONCTIONNEMENT D'UN TEL SYSTÈME AUDITIF

(30) Priorität: 26.02.2020 DE 102020202483
(43) Veröffentlichungstag der Anmeldung: 01.09.2021
(73) Patentinhaber: Sivantos Pte. Ltd., Singapore 539775 (SG)
(72) Erfinder: FISCHER, Rosa-Linde, 91058 Erlangen (DE); HANNEMANN, Ronny, 91054 Buckenhof (DE)
(74) Vertreter: FDST Patentanwälte

(56) Entgegenhaltungen:
- EP-A2- 1 303 166
- DE-A1- 102015 210 652
- US-A1- 2012 128 186

## Beschreibung

Die Erfindung bezieht sich auf ein Verfahren nach dem Oberbegriff des Anspruchs 1 zum Betrieb eines Hörsystems zur Unterstützung des Hörvermögens eines Nutzers, mit mindestens einem im oder am Ohr des Nutzers getragenen Hörinstrument. Die Erfindung bezieht sich weiterhin auf ein solches Hörsystem.

Als Hörinstrument wird allgemein ein elektronisches Gerät bezeichnet, dass das Hörvermögen einer das Hörinstrument tragenden Person (die nachfolgend als "Träger" oder "Nutzer" bezeichnet ist) unterstützt. Insbesondere bezieht sich die Erfindung auf Hörinstrumente, die dazu eingerichtet sind, einen Hörverlust eines hörgeschädigten Nutzers ganz oder teilweise zu kompensieren. Ein solches Hörinstrument wird auch als "Hörgerät" bezeichnet. Daneben gibt es Hörinstrumente, die das Hörvermögen von normalhörenden Nutzern schützen oder verbessern, zum Beispiel in komplexen Hörsituationen ein verbessertes Sprachverständnis ermöglichen sollen.

Hörinstrumente im Allgemeinen, und Hörgeräte im Speziellen, sind meist dazu ausgebildet, im oder am Ohr des Nutzers getragen zu werden, insbesondere als Hinter-dem-Ohr-Geräte (nach dem englischen Begriff "behind the ear" auch als BTE-Geräte bezeichnet) oder In-dem-Ohr-Geräte (nach dem englischen Begriff "in the ear" auch als ITE-Geräte bezeichnet). Im Hinblick auf ihre interne Struktur weisen Hörinstrumente regelmäßig mindestens einen (akusto-elektrischen) Eingangswandler, eine Signalverarbeitungseinheit (Signalprozessor) und einen Ausgangswandler auf. Im Betrieb des Hörinstruments nimmt der Eingangswandler einen Luftschall aus der Umgebung des Hörinstruments auf und wandelt diesen Luftschall in ein Eingangs-Audiosignal (d. h. ein elektrisches Signal, dass eine Information über den Umgebungsschall transportiert) um. Dieses Eingangs-Audiosignal ist nachfolgend auch als "aufgenommenes Schallsignal" bezeichnet. In der Signalverarbeitungseinheit wird das Eingangs-Audiosignal verarbeitet (d. h. hinsichtlich seiner Schallinformation modifiziert), um das Hörvermögen des Nutzers zu unterstützen, insbesondere um einen Hörverlust des Nutzers auszugleichen. Die Signalverarbeitungseinheit gibt ein entsprechend verarbeitetes Audiosignal (auch als "Ausgangs-Audiosignal" oder "modifiziertes Schallsignal" bezeichnet) an den Ausgangswandler aus. In den meisten Fällen ist der Ausgangswandler als elektro-akustischer Wandler ausgebildet, der das (elektrische) Ausgangs-Audiosignal wieder in einen Luftschall umwandelt, wobei dieser - gegenüber dem Umgebungsschall modifizierte - Luftschall in den Gehörgang des Nutzers abgegeben wird. Bei einem hinter dem Ohr getragenen Hörinstrument ist der auch als "Hörer" ("Receiver") bezeichnete Ausgangswandler meist außerhalb des Ohrs in einem Gehäuse des Hörinstruments integriert. Der von dem Ausgangswandler ausgegebene Schall wird in diesem Fall mittels eines Schallschlauchs in den Gehörgang des Nutzers geleitet. Alternativ hierzu kann der Ausgangswandler auch in dem Gehörgang, und somit außerhalb des hinter dem Ohr getragenen Gehäuses, angeordnet sein. Solche Hörinstrumente werden (nach dem englischen Begriff "receiver in canal") auch als RIC-Geräte bezeichnet. Im Ohr getragene Hörinstrumente, die so klein dimensioniert sind, dass sie nach außen über den Gehörgang nicht hinausstehen, werden (nach dem englischen Begriff "completely in canal") auch als CIC-Geräte bezeichnet.

In weiteren Bauformen kann der Ausgangswandler auch als elektro-mechanischer Wandler ausgebildet sein, der das Ausgangs-Audiosignal in Körperschall (Vibrationen) umwandelt, wobei dieser Körperschall zum Beispiel in den Schädelknochen des Nutzers abgegeben wird. Ferner gibt es implantierbare Hörinstrumente, insbesondere Cochlear-Implantate, und Hörinstrumente, deren Ausgangswandler den Hörnerv des Nutzers direkt stimulieren.

Der Begriff "Hörsystem" bezeichnet ein einzelnes Gerät oder eine Gruppe von Geräten und ggf. nicht-körperlichen Funktionseinheiten, die zusammen die im Betrieb eines Hörinstruments erforderlichen Funktionen bereitstellen. Das Hörsystem kann im einfachsten Fall aus einem einzelnen Hörinstrument bestehen. Alternativ hierzu kann das Hörsystem zwei zusammenwirkende Hörinstrumente zur Versorgung der beiden Ohren des Nutzers umfassen. In diesem Fall wird von einem "binauralen Hörsystem" gesprochen. Zusätzlich oder alternativ kann das Hörsystem mindestens ein weiteres elektronisches Gerät, zum Beispiel eine Fernbedienung, ein Ladegerät oder ein Programmiergerät für das oder jedes Hörgerät umfassen. Bei modernen Hörsystemen ist oft anstelle einer Fernbedienung oder eines dedizierten Programmiergerätes ein Steuerprogramm, insbesondere in Form einer sogenannten App, vorgesehen, wobei dieses Steuerprogramm zur Implementierung auf einem externen Computer, insbesondere einem Smartphone oder Tablet, ausgebildet ist. Der externe Computer ist dabei regelmäßig selbst kein Teil des Hörsystems und wird insbesondere in der Regel auch nicht von dem Hersteller des Hörsystems bereitgestellt.

Ein häufiges Problem von hörgeschädigten Nutzern sowie - in geringerem Maße - auch von normalhörenden Nutzern besteht darin, dass Gesprächspartner in Hörsituationen, in denen mehrere Personen sprechen (Multi-Sprecher-Umgebungen) schlecht verstanden werden. Dieses Problem kann teilweise behoben werden durch richtungsabhängige Dämpfung (Beamforming) des Eingangs-Audiosignals. Entsprechende Algorithmen sind regelmäßig so eingestellt, dass sie einen von vorne kommenden Anteil des Umgebungsschalls gegenüber anderen Geräuschquellen selektiv hervorheben, so dass der Nutzer einen Gesprächspartner besser verstehen kann, solange ihr ihn anschaut. Eine solche Signalverarbeitung schränkt den Nutzer aber nachteiligerweise in seiner Möglichkeit zur Interaktion mit der Umgebung ein. Beispielsweise kann der Nutzer den Kopf während einer Unterhaltung nicht von dem Gesprächspartner abwenden, ohne Gefahr zu laufen, den Faden zu verlieren. Weiterhin erhöht eine herkömmliche richtungsabhängige Dämpfung auch das Risiko, dass der Nutzer andere Personen, die sich an der Unterhaltung beteiligen wollen aber sich außerhalb der Richtkeule befinden, nicht versteht oder gar nicht erst bemerkt.

Der Anmeldung liegt die Aufgabe zugrunde, Nutzern eines Hörsystems ein besseres Sprachverständnis, insbesondere in einer Multi-Sprecher-Umgebung, zu ermöglichen.

Ein Verfahren nach dem Oberbegriff des Anspruchs 1 und ein zugehöriges Hörsystem sind aus EP 1 303 166 A2 bekannt. Ähnliche Verfahren und Hörsysteme sind aus US 2012 128186 A1 und DE 10 2015 210 652 A1 bekannt.

Bezüglich eines Verfahrens wird diese Aufgabe erfindungsgemäß gelöst durch die Merkmale des Anspruchs 1. Bezüglich eines Hörgerätesystems wird die Aufgabe erfindungsgemäß gelöst durch die Merkmale des Anspruchs 14. Vorteilhafte und teils für sich gesehen erfinderische Ausgestaltungen oder Weiterentwicklungen der Erfindung sind in den Unteransprüchen und der nachfolgenden Beschreibung dargelegt.

Die Erfindung bezieht geht allgemein aus von einem Hörsystem zur Unterstützung des Hörvermögens eines Nutzers, wobei das Hörsystem mindestens ein im oder an einem Ohr des Nutzers getragenes Hörinstrument aufweist. Wie vorstehend beschrieben, kann das Hörsystem in einfachen Ausführungen der Erfindung ausschließlich aus einem einzigen Hörinstrument bestehen. Vorzugsweise umfasst das Hörsystem aber zusätzlich zu dem Hörinstrument mindestens eine weitere Komponente, z.B. ein weiteres (insbesondere gleichartiges) Hörinstrument zur Versorgung des anderen Ohrs des Nutzers, ein Steuerprogramm (insbesondere in Form einer App) zur Ausführung auf einem externen Computer (insbesondere einem Smartphone) des Nutzers und/oder mindestens ein weiteres elektronisches Gerät, z. B. eine Fernbedienung oder ein Ladegerät. Das Hörinstrument und die mindestens eine weitere Komponente stehen dabei miteinander in Datenaustausch, wobei Funktionen der Datenspeicherung und/oder Datenverarbeitung des Hörsystems unter dem Hörinstrument und der mindestens einen weiteren Komponente aufgeteilt sind.

Das Hörinstrument weist mindestens einen Eingangswandler zur Aufnahme eines Schallsignals (insbesondere in Form von Luftschall) aus einer Umgebung des Hörinstruments, eine Signalverarbeitungseinheit zur Verarbeitung (Modifizierung) des aufgenommenen Schallsignals, um das Hörvermögen des Nutzers zu unterstützen, und einen Ausgangswandler zur Ausgabe des modifizierten Schallsignals auf. Sofern das Hörsystem ein weiteres Hörinstrument zur Versorgung des anderen Ohrs des Nutzers aufweist, weist auch dieses weitere Hörinstrument vorzugsweise mindestens einen Eingangswandler, eine Signalverarbeitungseinheit und einen Ausgangswandler auf. Anstelle eines zweiten Hörinstruments mit Eingangswandler, Signalverarbeitungseinheit und Ausgangswandler kann für das zweite Ohr auch ein Hörinstrument vorgesehen sein, das selbst keinen Ausgangswandler hat, sondern nur Schall aufnimmt und - mit oder ohne Signalverarbeitung - an das Hörinstrument des ersten Ohrs weiterleitet. Solche sogenannten CROS- oder BiCROS-Instrumente werden insbesondere bei Nutzern mit einseitiger Taubheit eingesetzt.

Das oder jedes Hörinstrument des Hörsystems liegt insbesondere in einer der eingangs beschriebenen Bauformen (BTE-Gerät mit internem oder externen Ausgangswandler, ITE-Gerät, z.B. CIC-Gerät, Hörimplantat, insbesondere Cochlear-Implantat, etc.) vor. Im Falle eines binauralen Hörsystems sind vorzugsweise beide Hörinstrumente gleichartig ausgebildet.

Bei dem oder jedem Eingangswandler handelt es sich insbesondere um einen akusto-elektrischen Wandler, der einen Luftschall aus der Umgebung in ein elektrisches Eingangs-Audiosignal umwandelt. Um eine richtungsabhängige Analyse und Verarbeitung des aufgenommenen Schallsignals zu ermöglichen, umfasst das Hörsystem vorzugsweise mindestens zwei Eingangswandler, die in demselben Hörinstrument angeordnet oder - falls vorhanden - auf die zwei Hörinstrumente des Hörsystems aufgeteilt sein können. Der Ausgangswandler ist vorzugsweise als elektro-akustischer Wandler (Hörer) ausgebildet, der das von der Signalverarbeitungseinheit modifizierte Audiosignal wiederum in einen Luftschall umwandelt. Alternativ ist der Ausgangswandler zur Abgabe eines Körperschalls oder zur direkten Stimulierung des Hörnervs des Nutzers ausgebildet.

Die Signalverarbeitungseinheit umfasst bevorzugt eine Mehrzahl von Signalverarbeitungsfunktionen, die auf das aufgenommene Schallsignal, d.h. das Eingangs-Audiosignal, angewendet werden, um dieses zur Unterstützung des Hörvermögens des Nutzers aufzubereiten. Die Signalverarbeitungsfunktionen umfassen insbesondere eine beliebige Auswahl aus den Funktionen frequenzselektive Verstärkung, dynamische Kompression, spektrale Kompression, richtungsabhängige Dämpfung (Beamforming), Störgeräuschunterdrückung, z.B. klassische Störgeräuschunterdrückung mittels eines Wiener-Filters oder aktive Störgeräuschunterdrückung (Active Noise Cancellation, kurz ANC), aktive Rückkopplungsunterdrückung (Active Feedback Cancellation, kurz AFC), Windgeräuschunterdrückung, Stimmerkennung (Voice Activity Detection), Erkennung bzw. Aufbereitung der eigenen Stimme (Own Voice Detection, Own Voice Processing), Tinnitus-Maskierung, etc. Jede dieser Funktionen oder zumindest ein Großteil dieser Funktionen ist dabei durch einen oder mehrere Signalverarbeitungsparameter parametrierbar. Als Signalverarbeitungsparameter wird eine Variable bezeichnet, die mit unterschiedlichen Werten belegt werden kann, um die Wirkungsweise der zugehörigen Signalverarbeitungsfunktion zu beeinflussen. Bei einem Signalverarbeitungsparameter kann es sich im einfachsten Fall um eine binäre Variable handeln, mit der die jeweilige Funktion an- und ausgeschaltet wird. In komplexeren Fällen sind Hörgeräteparameter durch skalare Fließkommazahlen, binäre oder kontinuierlich variable Vektoren oder mehrdimensionale Arrays, etc. gebildet. Ein Beispiel für solche Signalverarbeitungsparameter ist ein Set von Verstärkungsfaktoren für eine Anzahl von Frequenzbändern der Signalverarbeitungseinheit, die die frequenzabhängige Verstärkung des Hörinstruments definieren.

Im Zuge des mittels des Hörsystems ausgeführten Verfahrens wird von dem mindestens einen Eingangswandler des Hörinstruments ein Schallsignal aus der Umgebung des Hörinstruments aufgenommen. Das aufgenommene Schallsignal (Eingangs-Audio-Signal) wird in einem Signalverarbeitungsschritt zur Unterstützung des Hörvermögens eines Nutzers modifiziert. Das modifizierte Schallsignal wird mittels des Ausgangswandlers des Hörinstruments ausgegeben.

Verfahrensgemäß werden in einem Analyseschritt durch Analyse des aufgenommenen Schallsignals Sprachintervalle erkannt, in denen das aufgenommene Schallsignal (gesprochene) Sprache eines von dem Nutzer verschiedenen Sprechers enthält.

Als Sprachintervall (speech interval) wird hier und im Folgenden allgemein ein zeitlich begrenzter Abschnitt des aufgenommenen Schallsignals bezeichnet, der gesprochene Sprache enthält. Sprachintervalle, die Sprache des Nutzers selbst enthalten, werden dabei als "Eigen-Sprachintervalle" (own speech intervals) bezeichnet. **In** Abgrenzung hiervon werden Sprachintervalle, die Sprache mindestens eines von dem Nutzer verschiedenen Sprechers enthalten, unabhängig von dem Sprachtyp (language) - also unabhängig davon, ob der Sprecher Englisch, Deutsch, Französisch, etc. spricht - als "Fremd-Sprachintervalle" (foreign speech intervals) bezeichnet.

Zur Vermeidung von sprachlichen Uneindeutigkeiten werden im Folgenden nur die von dem Nutzer verschiedenen Personen als "Sprecher" (talker) bezeichnet. Der Nutzer selbst wird hier und im Folgenden also nicht unter die "Sprecher" gerechnet, auch wenn er spricht.

Erfindungsgemäß werden in dem Analyseschritt durch Analyse des aufgenommenen Schallsignals in erkannten Fremd-Sprachintervallen verschiedene Sprecher identifiziert. Das Wort "identifizieren" wird dabei in dem Sinn verwendet, dass jeder der identifizierten Sprecher wiedererkennbar von anderen Sprechern unterschieden wird. In dem Analyseschritt wird dabei jedes erkannte Fremd-Sprachintervall demjenigen Sprecher zugeordnet, der in diesem Fremd-Sprachintervall spricht. Bevorzugt werden Signalanteile von gleichzeitig sprechenden Personen (z.B. Signalanteile des Nutzers und mindestens eines Sprechers oder Signalanteile mehrerer Sprecher) signalverarbeitungstechnisch voneinander getrennt und getrennt voneinander verarbeitet. Ein Eigen-Sprachintervall und ein Fremd-Sprachintervall oder Fremd-Sprachintervalle verschiedener Sprecher können sich dabei zeitlich überlappen. In alternativen Ausführungen der Erfindung werden zeitliche Abschnitte des aufgenommenen Schallsignals stets nur einem der beteiligten Sprecher zugeordnet, auch wenn sie Sprachanteile mehrerer Personen enthalten.

Erfindungsgemäß wird für jedes erkannte Fremd-Sprachintervall der zugeordnete Sprecher im Zuge einer Interaktionsklassifizierung danach klassifiziert, ob dieser Sprecher mit dem Nutzer in einer direkten Kommunikationsbeziehung steht oder nicht. Sprecher, die mit dem Nutzer in einer direkten Kommunikationsbeziehung stehen, werden im Folgenden als "Hauptsprecher" (main talker) bezeichnet. Sprecher, die nicht mit dem Nutzer in einer direkten Kommunikationsbeziehung stehen, werden im Folgenden als "Nebensprecher" (secondary talker) bezeichnet. Als "Kommunikation" wir hier und im Folgenden eine zumindest versuchte (bewusste oder unbewusste) Informationsübermittlung zwischen einem Sprecher und dem Nutzer durch gesprochene Sprache bezeichnet. Eine direkte Kommunikationsbeziehung ist dabei dann gegeben, wenn Information unmittelbar (ohne Vermittlung durch weitere Personen oder Mittel) zwischen dem Sprecher und dem Nutzer übermittelt wird. Für das vorliegende Verfahren sind hierbei insbesondere vier Fälle einer direkten Kommunikationsbeziehung relevant, nämlich
- erstens der Fall, in dem der Nutzer und der Sprecher wechselseitig miteinander sprechen,
- zweitens der Fall, in dem der Sprecher den Nutzer direkt anspricht und der Nutzer dem Sprecher bewusst zuhört,
- drittens der Fall, in dem der Sprecher den Nutzer direkt anspricht, der Nutzer dem Sprecher aber nicht bewusst zuhört (dies umfasst vor allem den Fall, dass der Nutzer den Sprecher und dessen Kommunikation mit dem Nutzer gar nicht bemerkt), und
- viertens den Fall, in dem der Sprecher den Nutzer nicht direkt anspricht, in dem aber der Nutzer dem Sprecher bewusst zuhört.

Eine direkte Kommunikationsbeziehung liegt im Umkehrschluss dann nicht vor, wenn der Sprecher den Nutzer nicht direkt anspricht, und der Nutzer dem Sprecher auch nicht bewusst zuhört.

In einer Multi-Sprecher-Umgebung kann jeder der mehreren Sprecher als Hauptsprecher oder als Nebensprecher klassifiziert werden. Es kann somit gleichzeitig mehrere Hauptsprecher und/oder mehrere Nebensprecher geben. Die Interaktionsklassifizierung wird weiterhin zeitaufgelöst vorgenommen. Ein identifizierter Sprecher kann daher seinen Status als Hauptsprecher oder Nebensprecher, je nach seiner aktuellen Kommunikationsbeziehung mit dem Nutzer, wechseln. Ein bisher als Nebensprecher klassifizierter Sprecher wird demnach zum Hauptsprecher, wenn eine direkte Kommunikationsbeziehung zwischen ihm und dem Nutzer entsteht. Ebenso wird ein bisher als Hauptsprecher klassifizierter Sprecher zum Nebensprecher, wenn die direkte Kommunikationsbeziehung zwischen ihm und dem Nutzer endet (z. B. wenn sich der Sprecher und der Nutzer jeweils dauerhaft anderen Gesprächspartnern zuwenden).

In Abhängigkeit von dieser Interaktionsklassifizierung (also je nachdem, ob der einem erkannten Fremd-Sprachintervall zugeordnete Sprecher als Hauptsprecher oder als Nebensprecher klassifiziert wurde), erfolgt in dem Signalverarbeitungsschritt die Modifikation der erkannten Fremd-Sprachintervalle in unterschiedlicher Weise, insbesondere unter Anwendung unterschiedlicher Einstellungen der Signalverarbeitungsparameter. Beispielsweise wird auf Fremd-Sprachintervalle, die einem als Hauptsprecher identifizierten Sprecher zugeordnet werden, die richtungsabhängige Dämpfung (Beamforming) in stärkerem Maß angewendet als auf Fremd-Sprachintervalle, die einem Nebensprecher zugeordnet werden. Mit anderen Worten wird die Richtkeule des Beamformers bevorzugt und besonders ausgeprägt auf einen als Hauptsprecher identifizierten Sprecher ausgerichtet, während Signalanteile von Nebensprechern bevorzugt gedämpft oder mit geringer bzw. ohne Richtwirkung verarbeitet werden.

Durch die Klassifizierung der identifizierten Sprecher in Haupt- und Nebensprecher sowie durch die unterschiedliche Signalverarbeitung von Fremd-Sprachintervallen in Abhängigkeit von dieser (Interaktions-)Klassifizierung wird ermöglicht, Anteile des aufgenommenen Schallsignals, die auf Hauptsprecher zurückgehen, besonders hervorzuheben und somit für den Nutzer besser oder einfacher wahrnehmbar zu machen.

Die Interaktionsklassifizierung basiert in einer vorteilhaften Ausführungsform des Verfahrens auf einer Analyse der räumlichen Orientierung des oder jedes identifizierten Sprechers relativ zu dem Nutzer und insbesondere zu dessen Kopforientierung. In dem Analyseschritt werden dabei für mindestens einen identifizierten Sprecher (vorzugsweise für jeden identifizierten Sprecher) die räumliche Orientierung sowie optional ein Abstand dieses Sprechers relativ zu dem Kopf des Nutzers erfasst und bei der Interaktionsklassifizierung berücksichtigt. Beispielsweise wird dabei der Befund, dass sich ein Nutzer einem identifizierten Sprecher besonders häufig und/oder lange zuwendet, so dass dieser Sprecher überwiegend frontseitig bezüglich des Kopfes des Nutzers angeordnet ist, als Indiz dafür gewertet, dass dieser Sprecher als Hauptsprecher zu klassifizieren ist. Ein Sprecher, der stets oder zumindest überwiegend seitlich oder rückseitig bezüglich des Kopfes des Nutzes angeordnet ist, wird dagegen tendenziell als Nebensprecher klassifiziert.

Sofern auch der Abstand der identifizierten Sprecher bei der Interaktionsklassifizierung berücksichtigt wird, wird ein Abstand des Sprechers innerhalb eines bestimmten Abstandsbereichs als Indiz dafür gewertet, dass es sich bei diesem Sprecher um einen Hauptsprecher handelt. Ein Sprecher, der sich in einem vergleichsweise großen Abstand zu dem Kopf des Nutzers befindet, wird dagegen mit höherer Wahrscheinlichkeit als Nebensprecher klassifiziert.

Zusätzlich oder alternativ zu der räumlichen Orientierung wird für die Interaktionsklassifizierung vorzugsweise auch die Abfolge, in der Fremd-Sprachintervalle und Eigen-Sprachintervalle aufeinander wechseln (Turn-Taking), berücksichtigt. Hierbei werden in dem Analyseschritt auch Eigen-Sprachintervalle erkannt, in denen der Nutzer spricht. Für mindestens einen (vorzugsweise für jeden) identifizierten Sprecher wird eine zeitliche Abfolge der zugeordneten Fremd-Sprachintervalle und der erkannten Eigen-Sprachintervalle erfasst und bei der Interaktionsklassifizierung berücksichtigt. Ein Sprecher, dessen zugeordnete Fremd-Sprachanteile mit Eigen-Sprachanteilen überlappfrei oder mit nur vergleichsweise geringem Überlapp und vergleichsweise kleinen zwischengeordneten Sprachpausen abwechseln, wird tendenziell als Hauptsprecher klassifiziert, da ein solches Turn-Taking als Indiz dafür gewertet wird, dass sich der Sprecher in einer wechselseitigen Unterhaltung mit dem Nutzer befindet. Fremd-Sprachintervalle, die mit Eigen-Sprachintervallen zeitlich unkorreliert sind (die zum Beispiel im Durchschnitt einen großen Überlapp mit Eigen-Sprachintervallen aufweisen), werden dagegen als Fremd-Sprachintervalle von Nebensprechern gewertet.

Optional wird ferner auch das Turn-Taking zwischen zwei (vom Nutzer verschiedenen) Sprechern analysiert und für die Interaktions-Klassifizierung berücksichtigt. Dabei werden Fremd-Sprachintervalle verschiedener Sprecher, die miteinander überlappfrei oder mit lediglich geringem Überlapp zeitlich korreliert abwechseln, als Indiz dafür gewertet, dass die diesen Fremd-Sprachintervallen zugeordneten Sprecher miteinander in einer Unterhaltung stehen und somit - in Abwesenheit anderer Indizien für eine passive oder aktive Beteiligung des Nutzers - als Nebensprecher zu klassifizieren sind.

Wiederum zusätzlich oder alternativ erfolgt die Interaktionsklassifizierung in bevorzugten Ausführungen der Erfindung auf Basis der Lautstärke und/oder des Signal-Rausch-Verhältnisses des aufgenommenen Schallsignals. Dabei wird in dem Analyseschritt für jedes erkannte Fremd-Sprachintervall eine gemittelte Lautstärke (Pegel) und/oder ein Signal-Rausch-Verhältnis ermittelt und bei der Interaktionsklassifizierung berücksichtigt. Fremd-Sprachintervalle mit Lautstärke in einem vorgegebenen Bereich bzw. vergleichsweise gutem Signal-Rausch-Verhältnis werden dabei tendenziell einem Hauptsprecher zugeordnet, während eine vergleichsweise geringe Lautstärke bzw. ein geringes Signal-Rausch-Verhältnis während eines Fremd-Sprachintervalls als Indiz dafür gewertet wird, dass es sich bei dem zugeordneten Sprecher um einen Nebensprecher handelt. In einer vorteilhaften Ausführungsform werden zeitliche Änderungen in der räumlichen Verteilung der Sprecher (variierende Sprecherpositionen oder variierende Anzahl von Sprechern) bei der Interaktionsklassifizierung analysiert.

Wiederum zusätzlich oder alternativ wird bei der Interaktionsklassifizierung bevorzugt eine physiologische Reaktion des Nutzers während eines Fremd-Sprachintervalls berücksichtigt. Die physiologische Reaktion, d.h. eine zeitliche Änderung einer erfassten physiologischen Messgröße (z.B. des Herzschlags (Pulsrate), des Hautwiderstands, der Körpertemperatur, dem Zustand des Ohrmuskels, der Augenstellung und/oder der Hirntätigkeit), wird dabei insbesondere mittels mindestens eines in dem Hörsystem integrierten oder externen Biosensors, beispielsweise eines Pulsmessers, eines Hautwiderstandsmessgeräts eines Hautthermometers bzw. eines EEG-Sensors, ermittelt. Eine signifikante physiologische Reaktion des Nutzers während eines Fremd-Sprachintervalls, also eine vergleichsweise große Änderung der erfassten physiologischen Messgröße, wird dabei als Indiz dafür gewertet, dass es sich bei dem diesem Fremd-Sprachintervall zugeordneten Sprecher um einen Hauptsprecher handelt. Ein Sprecher, auf dessen Fremd-Sprachintervalle keine signifikante physiologische Reaktion des Nutzers erfolgt, wird dagegen tendenziell als Nebensprecher klassifiziert.

Ferner werden vorteilhafterweise auch Verhaltensmuster für die Interaktionsklassifizierung analysiert und herangezogen, z.B. Änderungen im Muster der Kopf- und Rumpfbewegungen, Bewegung im Raum (Annährung oder Distanzierung bzgl. fremden Sprechern), Änderungen in der Sprechweise (insbesondere der Intensität, Tonalität, Sprechrate/Wortanzahl pro Zeiteinheit) oder Sprechzeit, Änderung der Sitzposition, Verständnisfragen, Auswahl der Dialogpartner, etc. Beispielsweise kann das Verhalten des Nutzers hinsichtlich seiner Auswahl bestimmter fremder Sprecher innerhalb der aufgrund der Distanz- oder Richtungsanalyse ermittelten potentiellen Hauptsprecher analysiert werden. Die überproportional häufigere Interaktion mit einem nahen Sprecher oder die Fixation eines bestimmten Sprechers (erkannt an einer geringe Ausprägung oder Abwesenheit von Kopfbewegungen), während der Nutzer andere Sprecher weniger stark fixiert (erkannt an einer größeren Ausprägung von Kopfbewegungen), werden beispielsweise als Hinweis darauf gewertet, dass verschiedene Hauptsprecher unterschiedlich gut wahrgenommen werden.

Vorzugsweise wird eine Kombination mehrerer der vorstehend beschriebenen Kriterien (räumliche Verteilung der Sprecher, Turn-Taking, Lautstärke und/oder Signal-Rausch-Verhältnis der Sprachbeiträge und die physiologische Reaktion des Nutzers) sowie optional eines oder mehrere weitere Kriterien bei der Interaktionsklassifizierung berücksichtigt. In diesem Fall erfolgt die Interaktionsklassifizierung bevorzugt auf Basis einer Untersuchung mehrerer Kriterien auf Koinzidenz (wobei z.B. ein Sprecher als Hauptsprecher klassifiziert wird, wenn mehrere Indizien gleichzeitig erfüllt sind) oder Basis einer gewichteten Berücksichtigung der Erfüllung oder Nicht-Erfüllung der mehreren einzelnen Kriterien.

Die unterschiedliche Modifikation der erkannten Fremd-Sprachintervalle von Hauptsprechern und Nebensprechern in dem Signalverarbeitungsschritt äußert sich erfindungsgemäß darin,
- dass Fremd-Sprachintervalle des oder jedes als Hauptsprecher klassifizierten Sprechers in schwächerem Maße dynamisch komprimiert werden als Fremd-Sprachintervalle des oder jedes als Nebensprecher klassifizierten Sprechers (insbesondere ohne Kompression verarbeitet werden), und/oder
- dass Fremd-Sprachintervalle des oder jedes als Hauptsprecher klassifizierten Sprechers einer geringeren Störgeräuschreduktion (Active Noise Cancelling) unterzogen werden als Fremd-Sprachintervalle des oder jedes als Nebensprecher klassifizierten Sprechers.

Optional werden zusätzlich Fremd-Sprachintervalle des oder jedes als Hauptsprecher klassifizierten Sprechers in höherem Maße verstärkt und/oder in stärkerem Maße einer richtungsabhängigen Dämpfung (Beamforming) unterzogen als Fremd-Sprachintervalle des oder jedes als Nebensprecher klassifizierten Sprechers; die Richtkeule des Beamforming-Algorithmus wird dabei insbesondere auf den Hauptsprecher ausgerichtet.

Der Unterschied in der Verarbeitung der Stimmanteile von Haupt- und Nebensprechern ist in zweckmäßigen Ausführungen der Erfindung fest (unveränderlich) vorgegeben.

In einer bevorzugten Variante der Erfindung wird dieser Unterschied dagegen in Abhängigkeit der Kommunikationsqualität verändert. Dabei wird für den oder jeden als Hauptsprecher klassifizierten Sprecher ein Maß (d.h. eine Kenngröße) für die Kommunikationsqualität ermittelt, das charakteristisch für den Erfolg der Informationsübermittlung zwischen diesem Hauptsprecher und dem Nutzer und/oder für die mit dieser Kommunikation verbundene Höranstrengung des Nutzers ist. Das genannte Maß für die Kommunikationsqualität (kurz auch: "Qualitätsmaß" / "Quality Measure") hat beispielsweise einen vergleichsweise hohen Wert, wenn der Nutzer die von einem als Hauptsprecher klassifizierten Sprecher übermittelte Information ohne erkennbar erhöhte Höranstrengung erfasst; es hat dagegen einen vergleichsweise geringen Wert, wenn der Nutzer während Fremd-Sprachintervallen dieses Hauptsprechers eine erhöhte Höranstrengung zeigt, die von diesem Hauptsprecher übermittelte Information erfassbar nicht versteht oder diesen Hauptsprecher überhaupt nicht bemerkt.

Bei dem Qualitätsmaß handelt es sich vorzugsweise um eine kontinuierlich variable Größe, beispielsweise um eine Fließkommazahl, die einen zwischen zwei vorgegebenen Grenzen variablen Wert annehmen kann. Alternativ hierzu kann es sich bei dem Qualitätsmaß in einfachen Ausführungen der Erfindung auch um eine binäre Größe handeln. In jedem der vorstehend genannten Fälle wird die Modifikation der diesem Hauptsprecher zugeordneten Fremd-Sprachintervalle in dem Signalverarbeitungsschritt dabei in Abhängigkeit von dem genannten Qualitätsmaß vorgenommen.

Bei der Bestimmung des Qualitätsmaßes werden vorzugsweise gleiche oder ähnliche Kriterien wie für die Interaktionsklassifizierung herangezogen. So wird das Qualitätsmaß vorzugsweise
- anhand der räumlichen Orientierung und/oder des Abstands des Hauptsprechers relativ zu dem Kopf des Nutzers,
- anhand der zeitlichen Abfolge (Turn-Taking) der dem Hauptsprecher zugeordneten Fremd-Sprachintervalle der erkannten Eigen-Sprachintervalle,
- anhand der physiologischen Reaktion des Nutzers während eines dem Hauptsprecher zugeordneten Fremd-Sprachintervalls,
- anhand der Lautstärke des Stimmenanteils des Hauptsprechers und/oder
- anhand einer Auswertung von Verhaltensmustern wie vorstehend beschrieben
ermittelt. Eine Fixierung des Hauptsprechers durch den Nutzer (d. h. eine außergewöhnlich starke Zuwendung des Nutzers zum Hauptsprecher), ein außergewöhnlich geringer Abstand zwischen dem Nutzer und dem Hauptsprecher, eine für außergewöhnlich hohe Höranstrengung oder Frustration charakteristische physiologische Reaktion des Nutzers und eine erhöhte Lautstärke der Stimme des Hauptsprechers werden als Indizien für eine schlechte Kommunikationsqualität gewertet.

Zusätzlich oder alternativ wird in einer vorteilhaften Ausführungsform der Erfindung für mindestens ein Eigen-Sprachintervall eine Spektraleigenschaft, insbesondere eine Fundamentalfrequenz (Pitch) der Stimme des Nutzers ermittelt und/oder es wird für mindestens ein dem Hauptsprecher zugeordneten Fremd-Sprachintervall eine Spektraleigenschaft der Stimme des Hauptsprechers ermittelt. In diesen Fällen wird das Qualitätsmaß (ausschließlich oder zumindest auch) anhand der Spektraleigenschaft der Stimme des Nutzers bzw. anhand der Spektraleigenschaft der Stimme des Hauptsprechers ermittelt. Beispielweise wird dabei eine gegenüber einem Normalwert erhöhte Fundamentalfrequenz der Stimme des Nutzers oder des Hauptsprechers als Indiz für eine schlechte Kommunikationsqualität gewertet. Diese Erfindungsvariante beruht auf der Erkenntnis, dass der Nutzer oder andere Sprecher typischerweise in Situationen mit schlechter Kommunikationsqualität dazu neigen, die Stimme zu heben.

Wiederum zusätzlich oder alternativ wird vorzugsweise für mindestens ein Eigenoder Fremd-Sprachintervall eine Lautstärke des aufgenommenen Schallsignals (insbesondere eine Lautstärke der eigenen Stimme des Nutzers bzw. Hauptsprechers) ermittelt und bei der Bestimmung des Qualitätsmaßes berücksichtigt. Diese Erfindungsvariante liegt die Erfahrung zugrunde, dass Menschen (und damit insbesondere auch der Nutzer des Hörsystems und die mit diesem kommunizierenden Hauptsprecher) dazu neigen, in Situationen mit schlechter Kommunikationsqualität lauter zu sprechen.

Wiederum zusätzlich oder alternativ wird vorzugsweise für mindestens ein Eigen-Sprachintervall ein Sprachrhythmus oder die Sprechrate (Sprachgeschwindigkeit) des Nutzers ermittelt und/oder es wird für mindestens ein einem Hauptsprecher zugeordnetes Fremd-Sprachintervall ein Sprachrhythmus des Hauptsprechers ermittelt. Der Sprachrhythmus des Nutzers bzw. des Hauptsprechers wird dabei bei der Bestimmung des Qualitätsmaßes berücksichtigt. Dieser Erfindungsvariante liegt die Erkenntnis zugrunde, dass Menschen (und damit auch der Nutzer des Hörsystems und die mit diesem kommunizierenden Hauptsprecher) in Situationen mit schlechter Kommunikationsqualität dazu neigen, mit einem im Vergleich zu Normalsituationen veränderten Sprachrhythmus zu sprechen. So äußert sich eine schlechte Kommunikationsqualität beispielsweise oft in einem verlangsamten Sprachrhythmus, da der Nutzer oder andere Sprecher versucht, durch langsames Sprechen ein besseres Verständnis bei dem Kommunikationspartner zu erzielen. Situationen mit schlechter Kommunikationsqualität können andererseits aber als Folge einer Unzufriedenheit des Nutzers oder anderen Sprechers auch mit einem außergewöhnlich beschleunigten Sprachrhythmus verbunden sein. Ein außergewöhnlich erhöhter oder erniedrigter Sprachrhythmus des Nutzers oder Hauptsprechers wird daher als Indiz für eine schlechte Kommunikationsqualität gewertet.

Die Sprachanalyseeinheit berechnet das Qualitätsmaß vorzugsweise auf Basis einer gewichteten Analyse der vorstehend beschriebenen Indizien. Alternativ hierzu setzt die Sprachanalyseeinheit das Qualitätsmaß auf einen eine schlechte Kommunikationsqualität anzeigenden Wert, wenn mehrere der oben genannten Indizien gleichzeitig erfüllt sind.

Das erfindungsgemäße Hörsystem ist allgemein zur automatischen Durchführung des vorstehend beschriebenen erfindungsgemäßen Verfahrens eingerichtet. Das Hörsystem ist also dazu eingerichtet, mittels des mindestens einen Eingangswandlers des mindestens einen Hörinstruments ein Schallsignal aus einer Umgebung des Hörinstruments aufzunehmen, das aufgenommene Schallsignal in dem Signalverarbeitungsschritt zur Unterstützung des Hörvermögens eines Nutzers zu modifizieren und das modifizierte Schallsignal mittels des Ausgangswandlers des Hörinstruments auszugeben. Das Hörsystem ist weiterhin dazu eingerichtet, in dem Analyseschritt Fremd-Sprachintervalle zu erkennen, in erkannten Fremd-Sprachintervallen verschiedene Sprecher zu identifizieren, und jedes Fremd-Sprachintervall demjenigen Sprecher, der in diesem Fremd-Sprachintervall spricht, zuzuordnen. Das Hörsystem ist schließlich auch dazu eingerichtet, für jedes erkannte Fremd-Sprachintervall den zugeordneten Sprecher im Zuge der Interaktionsklassifizierung als Hauptsprecher oder als Nebensprecher zu klassifizieren, und in dem Signalverarbeitungsschritt die Modifikation der erkannten Fremd-Sprachintervalle in Abhängigkeit von der Interaktionsklassifizierung (also je nachdem, ob der zugeordnete Sprecher als Hauptsprecher oder als Nebensprecher klassifiziert wurde), in unterschiedlicher Weise durchzuführen.

Die Einrichtung des Hörsystems zur automatischen Durchführung des erfindungsgemäßen Verfahrens ist programmtechnischer und/oder schaltungstechnischer Natur. Das erfindungsgemäße Hörsystem umfasst also programmtechnische Mittel (Software) und/oder schaltungstechnische Mittel (Hardware, z.B. in Form eines ASIC), die im Betrieb des Hörsystems das erfindungsgemäße Verfahren automatisch durchführen. Die programmtechnischen bzw. schaltungstechnischen Mittel zur Durchführung des Verfahrens können hierbei ausschließlich in dem Hörinstrument (oder dem Hörinstrumenten) des Hörsystems, angeordnet sein. Alternativ sind die programmtechnischen bzw. schaltungstechnischen Mittel zur Durchführung des Verfahrens auf das Hörinstrument bzw. die Hörgeräte sowie mindestens auf ein weiteres Gerät oder eine Softwarekomponente des Hörsystems verteilt. Beispielsweise sind programmtechnische Mittel zur Durchführung des Verfahrens auf das mindestens eine Hörinstrument des Hörsystems sowie auf ein auf einem externen elektronischen Gerät (insbesondere einem Smartphone) installiertes Steuerprogramm verteilt.

Die vorstehend beschriebenen Ausführungsformen des erfindungsgemäßen Verfahrens korrespondieren mit entsprechenden Ausführungsformen des erfindungsgemäßen Hörsystems. Die vorstehenden Ausführungen zu dem erfindungsgemäßen Verfahren sind entsprechend auf das erfindungsgemäße Hörsystem übertragbar und umgekehrt.

**In** bevorzugten Ausführungsformen ist das Hörsystem insbesondere dazu eingerichtet, in dem Analyseschritt
- für mindestens einen (vorzugsweise für jeden) identifizierten Sprecher eine räumliche Orientierung (sowie optional einen Abstand) dieses Sprechers relativ zu dem Kopf des Nutzers zu erfassen und bei der Interaktionsklassifizierung zu berücksichtigen,
- auch Eigen-Sprachintervalle zu erkennen, für mindestens einen (vorzugsweise für jeden) identifizierten Sprecher eine zeitliche Abfolge (Turn-Taking) der zugeordneten Fremd-Sprachintervalle und der erkannten Eigen-Sprachintervalle zu erfassen und bei der Interaktionsklassifizierung zu berücksichtigen,
- für jedes erkannte Fremd-Sprachintervall eine gemittelte Lautstärke und/oder ein Signal-Rausch-Verhältnis zu ermitteln und bei der Interaktionsklassifizierung zu berücksichtigen, und/oder
- für jedes erkannte Fremd-Sprachintervall eine physiologische Reaktion des Nutzers zu erfassen und bei der Interaktionsklassifizierung zu berücksichtigen.

In weiteren bevorzugten Ausführungsformen ist das Hörsystem insbesondere dazu eingerichtet, in dem Signalverarbeitungsschritt
- Fremd-Sprachintervalle des oder jedes als Hauptsprecher klassifizierten Sprechers in höherem Maße zu verstärken als Fremd-Sprachintervalle des oder jedes als Nebensprecher klassifizierten Sprechers,
- Fremd-Sprachintervalle des oder jedes als Hauptsprecher klassifizierten Sprechers in geringerem Maße dynamisch zu komprimieren als Fremd-Sprachintervalle des oder jedes als Nebensprecher klassifizierten Sprechers (insbesondere gar nicht zu komprimieren),
- Fremd-Sprachintervalle des oder jedes als Hauptsprecher klassifizierten Sprechers einer geringeren Geräuschreduktion (Active Noise Cancelling) und/oder Rückkopplungsunterdrückung (Active Feedback Cancelling) zu unterziehen als Fremd-Sprachintervalle des oder jedes als Nebensprecher klassifizierten Sprechers, und/oder
- Fremd-Sprachintervalle des oder jedes als Hauptsprecher klassifizierten Sprechers in stärkerem Maße einer richtungsabhängigen Dämpfung (Beamforming) zu unterziehen als Fremd-Sprachintervalle des oder jedes als Nebensprecher klassifizierten Sprechers.

In weiteren bevorzugten Ausführungsformen ist das Hörsystem insbesondere dazu eingerichtet, für den oder jeden als Hauptsprecher klassifizierten Sprecher ein Maß für die Kommunikationsqualität (Qualitätsmaß) zu erfassen und die Modifikation der diesem Hauptsprecher zugeordneten Fremd-Sprachintervalle in Abhängigkeit von diesem Qualitätsmaß vorzunehmen.

Das Hörsystem ist dabei insbesondere dazu eingerichtet, das Qualitätsmaß in der vorstehend beschriebenen Weise
- anhand der räumlichen Orientierung (und/oder des Abstands) des Hauptsprechers relativ zu dem Kopf des Nutzers,
- anhand der zeitlichen Abfolge (Turn-Taking) der dem Hauptsprecher zugeordneten Fremd-Sprachintervalle und der erkannten Eigen-Sprachintervalle,
- anhand der physiologischen Reaktion des Nutzers während eines dem Hauptsprecher zugeordneten Fremd-Sprachintervalls,
- anhand einer Spektraleigenschaft, insbesondere der Fundamentalfrequenz, der Stimme des Nutzers und/oder eines Hauptsprechers,
- anhand der Lautstärke eines Eigen-Sprachintervalls und/oder eines Fremd-sprachintervalls (insbesondere anhand der Lautstärke der eigenen Stimme des Nutzers bzw. der Stimme des Hauptsprechers),
- anhand des Sprachrhythmus (Sprachgeschwindigkeit) des Nutzers und/oder eines Hauptsprechers, und/oder
- anhand einer Auswertung von Verhaltensmustern wie vorstehend beschrieben
zu ermitteln.

Nachfolgend werden Ausführungsbeispiele der Erfindung anhand einer Zeichnung näher erläutert. Darin zeigen:
- Fig. 1: in einer schematischen Darstellung ein aus einem einzelnen Hörinstrument bestehendes Hörsystem in Form eines hinter einem Ohr eines Nutzers tragbaren Hörgeräts,
- Fig. 2: in einem Flussdiagramm ein Verfahren zum Betrieb des Hörsystems aus Fig. 1,
- Fig. 3: in einem Flussdiagramm eine alternative Ausführungsform des Verfahrens, und
- Fig. 4: in Darstellung gemäß Fig. 1 eine alternative Ausführungsform des Hörsystems, in dem dieses ein Hörinstrument in Form eines hinter dem Ohr tragbaren Hörgeräts sowie ein in einem Smartphone implementiertes Steuerprogramm umfasst.

Gleiche Teile und Größen sind in allen Figuren stets mit gleichen Bezugszeichen versehen.

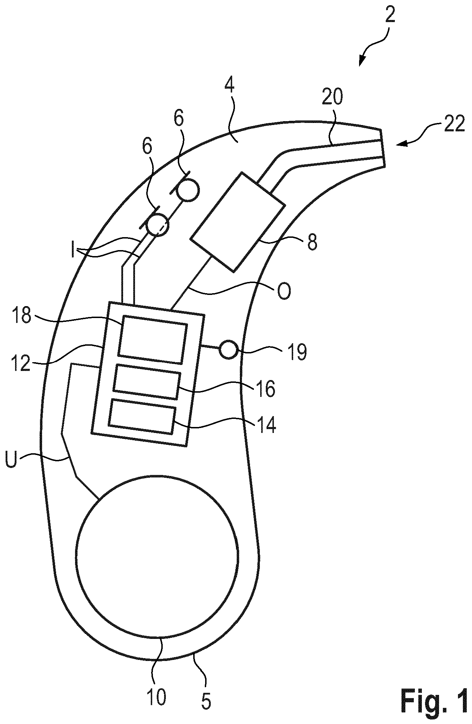

Fig. 1 zeigt ein Hörsystem 2 mit einem einzelnen Hörgerät 4, d. h. einem zur Unterstützung des Hörvermögens eines hörgeschädigten Nutzers eingerichteten Hörinstrument. Bei dem Hörgerät 4 handelt es sich in dem hier dargestellten Beispiel um ein hinter einem Ohr eines Nutzers tragbares BTE-Hörgerät.

Optional, in einer weiteren Ausführungsform der Erfindung, umfasst das Hörsystem 2 ein nicht ausdrücklich dargestelltes zweites Hörgerät zur Versorgung des zweiten Ohrs des Nutzers.

Das Hörgerät 4 umfasst innerhalb eines Gehäuses 5 mindestens ein Mikrofon 6 (im dargestellten Beispiel zwei Mikrofone) als Eingangswandler sowie einen Hörer 8 (Receiver) als Ausgangswandler. Das Hörgerät 4 umfasst weiterhin eine Batterie 10 und eine Signalverarbeitungseinheit in Form eines Signalprozessors 12. Vorzugsweise umfasst der Signalprozessor 12 sowohl eine programmierbare Untereinheit (zum Beispiel einen Mikroprozessor) als auch eine nichtprogrammierbare Untereinheit (zum Beispiel einen ASIC). Der Signalprozessor 12 umfasst eine (Stimmerkennungs-) Einheit 14 und eine (Sprachanalyse-)Einheit 16. Zusätzlich weist der Signalprozessor 12 optional eine (Physiologieanalyse-)Einheit 18 auf, die Signale eines oder mehrerer - ebenfalls optionaler - Biosensoren 19 auswertet, z.B. Signale eines Pulsmessers, eines Hautwiderstandssensors, eines Köpertemperatursensors und/oder eines EEG-Sensors.

Vorzugsweise sind die Einheiten 14 bis 18 als Softwarekomponenten ausgebildet, die in dem Signalprozessor 12 lauffähig implementiert sind. Der oder jeder Biosensor 19 kann - wie beispielhaft in Fig. 1 dargestellt - in dem Hörgerät 2 integriert sein. Die Physiologieanalyseeinheit 18 kann zusätzlich oder alternativ aber auch Signale von einem oder mehreren externen (d.h. außerhalb des Gehäuses 5 angeordneten) Biosensoren beziehen.

Der Signalprozessor 12 wird aus der Batterie 10 mit einer elektrischen Versorgungsspannung U versorgt.

Im Normalbetrieb des Hörgeräts 4 nehmen die Mikrofone 6 einen Luftschall aus der Umgebung des Hörgeräts 4 auf. Die Mikrofone 6 wandeln den Schall in ein (Eingangs-)Audiosignal I um, das Information über den aufgenommenen Schall enthält. Das Eingangs-Audiosignal I wird innerhalb des Hörgeräts 4 dem Signalprozessor 12 zugeführt.

Der Signalprozessor 12 verarbeitet das Eingangs-Audiosignal I unter Anwendung einer Mehrzahl von Signalverarbeitungs-Algorithmen, beispielsweise
- richtungsabhängiger Dämpfung (Beamforming),
- Störgeräusch- und/oder Rückkopplung-Unterdrückung,
- dynamischer Kompression und
- frequenzabhängiger Verstärkung basierend auf Audiogramm-Daten,
um den Hörverlust des Nutzers zu kompensieren. Die jeweilige Arbeitsweise der Signalverarbeitungs-Algorithmen, und damit des Signalprozessors 12 wird durch eine Vielzahl von Signalverarbeitungsparametern bestimmt. Der Signalprozessor 12 gibt ein Ausgangs-Audiosignal O, das Information über den verarbeiteten und somit modifizierten Schall enthält, an den Hörer 8 aus.

Der Hörer 8 wandelt das Ausgangs-Schallsignal O in einen modifizierten Luftschall um. Dieser modifizierte Luftschall wird über einen Schallkanal 20, der den Hörer 8 mit einer Spitze 22 des Gehäuses 5 verbindet, sowie über einen (nicht explizit gezeigten) flexiblen Schallschlauch, der die Spitze 22 mit einem in den Gehörgang des Nutzers eingesetzten Ohrstück verbindet, in den Gehörgang des Nutzers übertragen.

Die Stimmerkennungseinheit 14 detektiert allgemein das Vorhandensein von Stimme (d.h. gesprochener Sprache, unabhängig von der sprechenden Person) in dem Eingangs-Audiosignal I. Die Stimmerkennungseinheit 14 unterscheidet also nicht zwischen der Stimme des Nutzers und der Stimme eines anderen Sprechers und weist somit allgemein Sprachintervalle aus, d. h. zeitliche Abschnitte, in denen das Eingangs-Audiosignal I gesprochene Sprache enthält.

Die Sprachanalyseeinheit 16 wertet die erkannten Sprachintervalle aus und bestimmt darin
- die Orientierung der sprechenden Person bezüglich des Kopfes des Nutzers, insbesondere indem sie den Stimmanteil in mehreren unterschiedlich gerichteten Varianten des Eingangs-Audiosignals I (Beamformer-Signale) miteinander vergleicht oder indem sie die Richtung größter Verstärkung oder Dämpfung eines Richtungsalgorithmus (Beamformer) so einstellt, dass der Stimmanteil in dem Eingangs-Audiosignal I maximiert wird,
- (einen Schätzwert für) den Abstand der sprechenden Person bezüglich des Kopfes des Nutzers; um diesen Abstand abzuschätzen, wertet die Sprachanalyseeinheit 16 insbesondere die Lautstärke in Kombination mit gemittelten Winkelgeschwindigkeiten und/oder Amplituden der zeitlichen Änderung der Orientierung der sprechenden Person aus, wobei Orientierungsänderungen, die auf einer Kopfdrehung des Nutzers beruhen, vorzugsweise herausgerechnet oder auf andere Weise unberücksichtigt gelassen werden; bei dieser Auswertung berücksichtigt die Sprachanalyseeinheit 16, dass sich aus Sicht des Nutzers die Orientierung eines anderen Sprechers typischerweise umso schneller und großräumiger ändert, je kleiner der Abstand dieses Sprechers zu dem Nutzer ist; zusätzlich oder alternativ wertet die Sprachanalyseeinheit 16 zur Abschätzung des Abstandes die Grundfrequenz und das Verhältnis zwischen den Formanten von Vokalen in Sprachintervallen des Nutzers und/oder der fremden Sprecher aus; die Sprachanalyseeinheit 16 nutzt hierbei die Erkenntnis, dass die vorstehend genannten Größen von Sprechern typischerweise in Abhängigkeit von der Distanz zu dem jeweiligen Zuhörer in charakteristischer Weise variiert werden (je nach Abstand zu dem Zuhörer variiert die sprechende Person ihre Sprechweise typischerweise zwischen Flüstern, normaler Sprechweise und Schreien, um sich verständlich zu machen); ferner ist das Hörsystem 2 vorzugsweise dazu eingerichtet, drahtlos kommunizierende elektronische Mobilgeräte (z.B. Smartphones, andere Hörgeräte, etc.) in der Umgebung des Nutzers zu erkennen, den jeweiligen Abstand der erkannten Geräte zu ermitteln und die erfassten Abstandswerte zur Ermittlung oder Plausibilisierung des Abstands der sprechenden Person zum Kopf des Nutzers heranzuziehen,
- die Fundamentalfrequenz (Pitch) des Eingangs-Audiosignals I oder des Stimmanteils in dem Eingangs-Audiosignal I,
- den Sprachrhythmus (Sprachgeschwindigkeit) der sprechenden Person,
- den Pegel (Lautstärke) des Eingangs-Audiosignals I oder des Stimmanteils in dem Eingangs-Audiosignal I und/oder
- ein Signal-Rausch-Verhältnis des Eingangs-Audiosignals I.

Anhand einer oder mehrerer der oben genannten Größen unterscheidet die Sprachanalyseeinheit 16 die erkannten Sprachintervalle zum einen in Eigen-Sprachintervalle, in denen der Nutzer spricht, und Fremd-Sprachintervalle, in denen ein (von dem Nutzer verschiedener) Sprecher spricht.

Eigen-Sprachintervalle erkennt die Sprachanalyseeinheit 16 insbesondere daran, dass für den Stimmanteil des Eingangs-Audiosignals I in diesen Intervallen bezüglich des Kopfes des Nutzers eine unveränderte Orientierung von vorne ermittelt wird.

Zusätzlich wertet die Sprachanalyseeinheit 16 zur Eigenstimmerkennung optional die Fundamentalfrequenz und oder den Sprachrhythmus des Stimmanteils aus und vergleicht diesen beispielsweise mit hinterlegten Referenzwerten der Fundamentalfrequenz bzw. des Sprachrhythmus des Nutzers.

Wiederum oder alternativ wendet die Sprachanalyseeinheit 16 andere an sich bekannte Methoden zur Eigenstimmerkennung an, wie sie beispielsweise aus US 2013/0148829 A1 oder aus WO 2016/078786 A1 bekannt sind. Wiederum zusätzlich oder alternativ zieht die Sprachanalyseeinheit 16 zur Eigenstimmerkennung eine Körperschallinformation oder ein aufgenommenes Innenohr-Schallsignal heran; dies beruht auf der Erkenntnis, dass die eigene Stimme des Nutzers in dem über den Körper des Nutzers übertragenen Körperschall oder in dem im Gehörgang des Nutzers gemessenen Innenohr-Schallsignal mit wesentlich stärkerem Anteil gemessen wird als in dem dem Umgebungsschall entsprechenden Eingangs-Audiosignal I.

Zum anderen wertet die Sprachanalyseeinheit 16 erkannte Fremd-Sprachintervalle aus, um verschiedene Sprecher voneinander zu unterscheiden und somit jedes Fremd-Sprachintervall einem bestimmten individuellen Sprecher zuzuordnen.

Die Sprachanalyseeinheit 16 wertet hierbei die analysierten Fremd-Sprachintervalle beispielsweise bezüglich der Fundamentalfrequenz und/oder dem Sprachrhythmus aus. Zusätzlich wertet die Sprachanalyseeinheit 16 vorzugsweise auch die Orientierung und gegebenenfalls den Abstand der erfassten Sprachsignale aus, um verschiedene Sprecher voneinander zu unterscheiden. Diese Auswertung nutzt insbesondere die Tatsache, dass sich einerseits der Ort eines Sprechers bezüglich des Kopfes und gegenüber anderen Sprechern nicht sprunghaft ändern kann, und dass andererseits zwei Sprecher nicht gleichzeitig am demselben Ort sein können. Die Sprachanalyseeinheit 16 wertet daher konstante oder kontinuierlich variierende Orientierungs- und Abstandswerte als Indiz dafür, dass die zugehörigen Sprachsignale von demselben Sprecher stammen. Umgekehrt wertet die Sprachanalyseeinheit 16 unkorreliert veränderte Orientierungs- und Abstandswerte des jeweiligen Stimmanteils zweier Fremd-Sprachintervalle als Indiz dafür, dass die zugehörigen Sprachsignale von verschiedenen Sprechern stammen.

Die Sprachanalyseeinheit 16 erstellt vorzugsweise Profile von erkannten Sprechern mit jeweiligen Referenzwerten für mehrere der vorstehend genannten Größen (Fundamentalfrequenz, Sprachrhythmus, Orientierung, Abstand) und bestimmt bei der Analyse eines jeden Fremd-Sprachintervalls, ob die entsprechenden Größen mit den Referenzwerten aus einem der Profile kompatibel sind. Ist dies der Fall, so ordnet die Sprachanalyseeinheit 16 das Fremd-Sprachintervall dem jeweiligen Profil (und damit dem jeweiligen, erkannten Sprecher) zu. Andernfalls nimmt die Sprachanalyseeinheit 16 an, dass das analysierte Fremd-Sprachintervall einem neuen (noch unbekannten) Sprecher zuzuordnen ist und erstellt für diesen Sprecher ein neues Profil.

Sofern zu einem Zeitpunkt mehrere Personen (z.B. der Nutzer und mindestens ein weiterer Sprecher oder mehrere vom Nutzer verschiedene Sprecher) gleichzeitig sprechen, wertet die Sprachanalyseeinheit 16 die jeweiligen Stimmanteile mittels räumlicher Quellentrennung (unter Anwendung von Beamforming-Algorithmen) vorzugsweise separat voneinander aus. In diesem Fall ergeben sich somit mehrere Eigen- und/oder Fremd-Sprachintervalle, die sich zeitlich überlappen.

Die Sprachanalyseeinheit 16 zeichnet weiterhin eine Information über die zeitliche Länge und Abfolge der Eigen-Sprachintervalle und der Fremd-Sprachintervalle sowie die den Fremd-Sprachintervallen jeweils zugeordneten Sprecher auf. Anhand dieser Information ermittelt die Sprachanalyseeinheit 16 Kenngrößen, die für das sogenannte Turn-Taking zwischen Eigen-Sprachintervallen und Fremd-Sprachintervallen eines bestimmten Sprechers relevant sind. Als "Turn-Taking" wird die Organisation der Sprachbeiträge zweier sprechender Personen in einer Konversation, insbesondere die Abfolge der Sprachbeiträge dieser Personen, bezeichnet. Relevante Parameter des "Turn-Taking" sind insbesondere ununterbrochene Sprachbeiträge (TURNS) der sprechenden Personen, Überlappungen (OVERLAPS), Lücken (LAPSES), Pausen (PAUSES) und Wechsel (SWITCHES), wie sie beispielweise in S.A. Chowdhury, et al. "Predicting User Satisfaction from Turn-Taking in Spoken Conversations", Interspeech 2016 definiert sind.

Die Sprachanalyseeinheit 16 ermittelt insbesondere konkret
- die zeitliche Länge oder zeitliche Häufigkeit von TURNS des Nutzers und/oder TURNS des anderen Sprechers, wobei ein TURN ein Eigen- bzw. Fremd-Sprachintervall ohne PAUSE ist, während dessen der jeweilige Gesprächspartner schweigt;
- die zeitliche Länge oder zeitliche Häufigkeit von PAUSES, wobei eine PAUSE ein Intervall des Eingangs-Audiosignals I ohne Sprachanteil ist, das zwei aufeinanderfolgende TURNS des Nutzers oder zwei aufeinanderfolgende TURNS des anderen Sprechers trennt, sofern die zeitliche Länge dieses Intervalls einen vorgegebenen Schwellwert überschreitet; optional werden PAUSES zwischen TURNS des Nutzers und PAUSES zwischen TURNS des oder jedes anderen Sprechers jeweils getrennt voneinander erfasst und ausgewertet; alternativ hierzu werden alle PAUSES gemeinsam erfasst und ausgewertet;
- die zeitliche Länge oder zeitliche Häufigkeit von LAPSES, wobei eine LAPSE ein Intervall des Eingangs-Audiosignals I ohne Sprachanteil zwischen einem TURN des Nutzers und einem darauffolgenden TURN des anderen Sprechers oder zwischen einem TURN des anderen Sprechers und einem darauffolgenden TURN des Nutzers ist, wenn die zeitliche Länge dieses Intervalls einen vorgegebenen Schwellwert überschreitet; optional werden LAPSES zwischen einem TURN des Nutzers und einem TURN des anderen Sprechers und LAPSES zwischen einem TURN des anderen Sprechers und einem TURN des Nutzers jeweils getrennt voneinander erfasst und ausgewertet; alternativ hierzu werden alle LAPSES gemeinsam erfasst und ausgewertet;

- die zeitliche Länge oder zeitliche Häufigkeit von OVERLAPS, wobei eine OVERLAP ein Intervall des Eingangs-Audiosignals I ist, in dem sowohl der Nutzer als auch der andere Sprecher sprechen; vorzugsweise wird ein solches Intervall nur dann als OVERLAP gewertet, wenn die zeitliche Länge dieses Intervalls einen vorgegebenen Schwellwert überschreitet; optional werden OVERLAPS zwischen einem TURN des Nutzers und einem darauffolgenden TURN des anderen Sprechers und OVERLAPS zwischen einem TURN des anderen Sprechers und einem darauffolgenden TURN des Nutzers jeweils getrennt voneinander erfasst und ausgewertet; alternativ hierzu werden alle OVERLAPS gemeinsam erfasst und ausgewertet; und/oder
- die zeitliche Häufigkeit von SWITCHES, wobei ein SWITCH ein Übergang von einem TURN des Nutzers zu einem TURN des anderen Sprechers oder ein Übergang von einem TURN des anderen Sprechers zu einem darauffolgenden TURN des Nutzers ohne OVERLAP oder zwischengeordnete PAUSE ist, insbesondere also ein Übergang innerhalb eines bestimmten zeitlichen Schwellwertes; optional werden SWITCHES zwischen einem TURN des Nutzers und einem TURN des anderen Sprechers und SWITCHES zwischen einem TURN des anderen Sprechers und einem darauffolgenden TURN des Nutzers getrennt voneinander erfasst und ausgewertet; alternativ hierzu werden alle SWITCHES gemeinsam erfasst und ausgewertet.

Die für das "Turn-Taking" relevanten Kenngrößen werden für jeden erkannten Sprecher separat ermittelt. Die Sprachanalyseeinheit 16 ermittelt somit für jeden erkannten Sprecher separat, in welcher zeitlichen Abfolge die Fremd-Sprachintervalle dieses individuellen Sprechers mit den Eigen-Sprachintervallen stehen (und wie dieser Sprecher mithin mit dem Nutzer interagiert).

Anhand der vorstehend beschriebenen Analyse führt die Sprachanalyseeinheit 16 eine Interaktionsklassifizierung durch, im Zuge derer jeder Sprecher - wie vorstehend beschrieben - als "Hauptsprecher" oder als "Nebensprecher" klassifiziert wird.

Die Sprachanalyseeinheit 16 wertet bevorzugt mehrere der vorstehend beschriebenen Kenngrößen in einer vergleichenden Analyse aus, insbesondere eine oder mehrere für das "Turn-Taking" relevante Kenngrößen, die Orientierung und den Abstand des jeweiligen Sprechers zum Kopf des Nutzers, den Pegel des Stimmanteils des jeweiligen Sprechers sowie optional auch den Pegel des Stimmanteils des Nutzers und/oder die Fundamentalfrequenz des Stimmanteils des Sprechers sowie optional auch die Fundamentalfrequenz des Stimmanteils des Nutzers.

Als Indizien dafür, dass es sich bei einem bestimmten Sprecher um einen Hauptsprecher handelt, wertet die Sprachanalyseeinheit 16
- den Befund, dass sich der Nutzer dieser Sprecher während der diesem Sprecher zugeordneten Fremd-Sprachintervalle überwiegend zuwendet, so dass der Stimmanteil dieses Sprechers überwiegend von vorne kommt; die Zuwendung des Nutzers zu dem Sprecher wird als Anzeichen gewertet, dass der Nutzer dem Sprecher bewusst zuhört, unabhängig davon, ob der Sprecher den Nutzer direkt anspricht oder nicht;
- den Befund, dass der Nutzer und dieser Sprecher überwiegend zeitlich synchronisiert (insbesondere abwechselnd) sprechen, so dass Eigen-Sprachintervalle und Fremd-Sprachintervalle dieses Sprechers in einer zeitlich korrelierten Abfolge stehen; dies erkennt die Sprachanalyseeinheit 16 insbesondere an einer vergleichsweise hohen Häufigkeit von SWITCHES und/oder einer vergleichsweise niedrigen Häufigkeit von OVERLAPS und/oder einer vergleichsweise niedrigen Häufigkeit von LAPSES in der Kommunikation zwischen dem Nutzer und diesem Sprecher; beispielsweise vergleicht die Sprachanalyseeinheit 16 hierzu die Häufigkeiten von SWITCHES, OVERLAPS und LAPSES jeweils mit entsprechenden Schwellwerten; eine zeitlich korrelierte Abfolge der Sprachbeiträge des Nutzers und eines Sprechers ist einerseits ein Kennzeichen für eine wechselseitige Unterhaltung zwischen dem Sprecher und dem Nutzer; eine korrelierte Abfolge der Sprachbeiträge lässt aber auch eine Kommunikationssituation erkennen, in der ein Sprecher mit dem Nutzer in Kontakt treten will, auch wenn der Nutzer dies möglicherweise gar nicht bemerkt, oder eine Kommunikationssituation, in denen der Nutzer eigene Redebeiträge unterbricht, um dem Sprecher zuzuhören;
- den Befund, dass sich dieser Sprecher (absolut oder im Vergleich zu anderen Sprechern) in einem bestimmten Abstandsbereich zum Kopf des Nutzers befindet; dem liegt die Erkenntnis zugrunde, dass Gesprächspartner häufig einen vergleichsweise eng begrenzten Abstand )von beispielsweise zwischen 80 Zentimetern und 2 Metern; abhängig von dem Kulturraum des Nutzers und der Sprecher, dem Umgebungspegel, dem Gesprächsort und der Gruppengröße) zueinander einnehmen, während engere oder weitere Abstände zwischen Gesprächspartnern selten vorkommen. Die Sprachanalyseeinheit 16 vergleicht hierzu den Abstand des Sprechers zu dem Kopf des Nutzers mit hinterlegten Schwellwerten; diese Schwellwerte können fest vorgegeben sein oder nutzerabhängig variiert werden; eine Verringerung des Abstands zwischen dem Nutzer und dem Sprecher, insbesondere wenn sie mit Sprachbeiträgen des Nutzers und/oder dieses Sprechers zeitlich korreliert ist, wird optional ebenfalls als Indiz für eine direkte Kommunikationsbeziehung gewertet; und
- den Befund, dass der Stimmanteil dieses Sprechers innerhalb eines vorbestimmten Pegelbereichs liegt; dem liegt die Erkenntnis zugrunde, dass Gesprächspartner in der Regel die Lautstärke der eigenen Stimme so anpassen, dass sie von dem anderen Gesprächspartner in Abhängigkeit der Umgebungsbedingungen jeweils gut gehört werden kann, und dabei weder zu leise noch zu laut ist; der vorbestimmte Pegelbereich wird hierbei optional in Abhängigkeit des Störgeräuschpegels variiert; eine Steigerung des Pegels des Sprechers wird optional ebenfalls als Indiz für eine versuchte Kontaktaufnahme des Sprechers mit dem Nutzer gewertet.

Optional wertet die Sprachanalyseeinheit 16 zusätzlich auch Signale der Physiologieanalyseeinheit 18 bei der Interaktionsklassifikation aus. Als Indiz dafür, dass es sich bei einem bestimmten erkannten Sprecher um einen Hauptspeicher handelt, wertet die Sprachanalyseeinheit 16 hierbei den Befund, dass die von der Physiologieanalyseeinheit 18 ausgewerteten Signale des Biosensors 19 (oder, wenn das Hörgerät 2 auf Signale mehrere Biosensoren zugreift, mindestens eines dieser Signale) eine zeitlich mit den Fremd-Sprachintervallen dieses Sprechers korrelierte Änderung zeigt; die Feststellung einer mit Fremd-Sprachintervallen eines bestimmten Sprechers korrelierten physiologischen Reaktion lässt dabei auf eine erhöhte Aufmerksamkeit des Nutzers, und damit auf ein bewusstes Zuhören des Nutzers schließen.

Die Sprachanalyseeinheit 16 klassifiziert hierbei im Zuge der Interaktionsklassifizierung einen bestimmten erkannten Sprecher insbesondere dann als Hauptsprecher, wenn mehrere (beispielsweise mindestens zwei oder mindestens drei) der vorstehend beschriebenen Indizien für diesen Sprecher erfüllt sind. Ansonsten wird dieser Sprecher als Nebensprecher klassifiziert. Diese Klassifizierung ist dabei zeitlich variabel. Ein als Hauptsprecher klassifizierter Sprecher kann dabei zum Nebensprecher umklassifiziert werden und umgekehrt.

Je nachdem, ob ein bestimmter erkannter Sprecher als Hauptsprecher oder Nebensprecher klassifiziert wurde, werden die Stimmanteile dieses Sprechers in dem Eingangs-Audiosignal I unterschiedlich durch den Signalprozessor 12 bearbeitet. Dabei wird ein Fremd-Sprachintervall, wenn der diesem Sprachintervall zugeordnete Sprecher als Hauptsprecher klassifiziert wurde,
- mit einem größeren Verstärkungsfaktor verstärkt,
- in geringerem Maße dynamisch komprimiert,
- in geringerem Maße einer Störgeräusch -bzw. Rückkopplungsunterdrückung unterzogen, und/oder
- in stärkerem Maße einer richtungsabhängigen Dämpfung unterzogen
als ein Fremd-Sprachintervall, dessen zugeordneter Sprecher als Nebensprecher klassifiziert wurde.

Sofern das Eingangs-Audiosignal I zu einem bestimmten Zeitpunkt Stimmanteile mehrerer Sprecher enthält, werden die durch Quellentrennung separierten Stimmanteile dieser mehreren Sprecher durch den Signalprozessor 12 für den oder jeden als Hauptsprecher klassifizierten Sprecher und den oder jeden als Nebensprecher klassifizierten Sprecher in entsprechender Weise unterschiedlich verarbeitet.

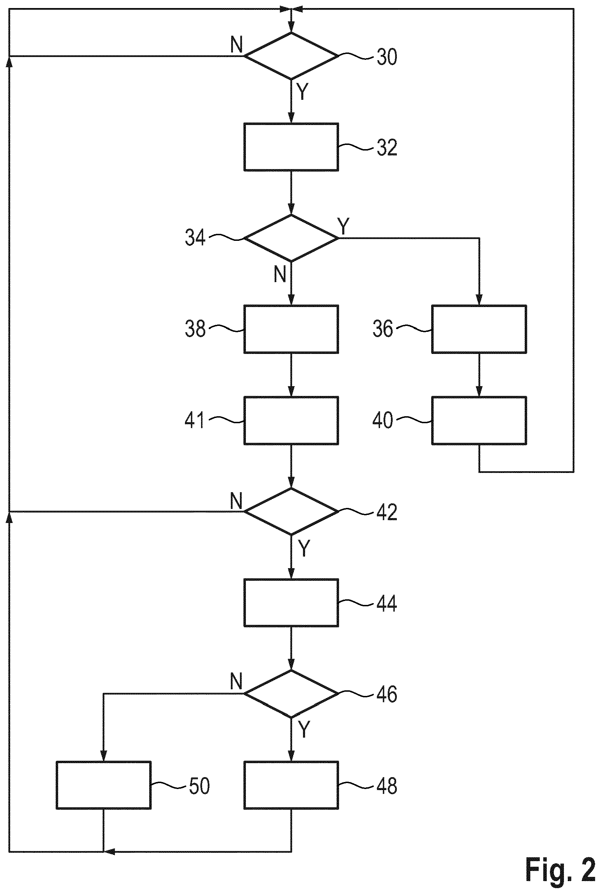

In Fig. 2 ist beispielhaft ein konkreter Ablauf des von dem Hörsystem 2 durchgeführten Verfahrens veranschaulicht. Danach prüft die Stimmerkennungseinheit 14 im gewöhnlichen Betrieb des Hörgeräts 4 in einem Schritt 30, ob das Eingangs-Audiosignal I gesprochene Sprache enthält. Ist dies der Fall (Y), veranlasst die Stimmerkennungseinheit 14 den Signalprozessor 12 zur Durchführung eines folgenden Schrittes 32. Andernfalls (N) wird der Schritt 30 durch die Stimmerkennungseinheit 14 wiederholt. Die Stimmerkennungseinheit 14 trennt hierdurch Sprachintervalle des Eingangs-Audiosignals I von Intervallen ohne Stimmanteil ab. Der Schritt 32 und die diesem folgenden weiteren Schritte des Verfahrens werden dabei nur in erkannten Sprachintervallen durchgeführt.

In dem Schritt 32 wird durch den Signalprozessor 12 eine Quellentrennung durchgeführt. Der Signalprozessor 12 erkennt hierbei durch Anwendung von Beamforming-Algorithmen räumlich verschiedene Geräuschquellen (insbesondere sprechende Personen) in dem Eingangs-Audiosignal I und trennt die diesen Geräuschquellen jeweils entsprechenden Signalanteile voneinander, um eine unterschiedliche Bearbeitung dieser Signalanteile zu ermöglichen. Im Regelfall enthält das Eingangs-Audiosignal I lediglich den Stimmanteil einer einzelnen sprechenden Person (nämlich des Nutzers oder eines von diesem verschiedenen Sprechers).

In einem folgenden Schritt 34 wird durch die Sprachanalyseeinheit 16 geprüft, ob der in dem Eingangs-Audiosignal I erkannte Stimmanteil (oder gegebenenfalls einer der in dem Eingangs-Audiosignal I erkannten Stimmanteile) die eigene Stimme des Nutzers enthält. Ist dies der Fall (Y), so wird auf diesen Stimmanteil durch die Sprachanalyseeinheit 16 ein folgender Schritt 36 angewendet.

Andernfalls (N), d. h. auf Stimmanteile des Eingangs-Audiosignals I, die Stimme eines von den Nutzer verschiedenen Sprechers enthalten, wird durch die Sprachanalyseeinheit 16 ein Schritt 38 angewendet. Auf diese Weise werden durch die Sprachanalyseeinheit 16 Eigen-Sprachintervalle und Fremd-Sprachintervalle in dem Eingangs-Audiosignal I getrennt voneinander analysiert.

Zu Ermittlung der für das "Turn-Taking" relevanten Kenngrößen ermittelt die Sprachanalyseeinheit 16 für das oder jedes erkannte Eigen-Sprachintervall in dem Schritt 36 den Anfangs- und Endzeitpunkt.

In einem folgenden Schritt 40 veranlasst die Sprachanalyseeinheit 16 für das erkannte Eigen-Sprachintervall die Einstellung von Signalverarbeitungsparametern des Signalprozessors 12, die für die Verarbeitung der eigenen Stimme des Nutzers optimiert sind. Der Signalprozessor 12 kehrt dann in der Verfahrensdurchführung zu Schritt 30 zurück.

Für jedes erkannte Fremd-Sprachintervall identifiziert die Sprachanalyseeinheit 16 in dem Schritt 38 den jeweiligen Sprecher, indem sie in der vorstehend beschriebenen Weise Charakteristika (Orientierung, Abstand, Fundamentalfrequenz, Sprachrhythmus) des Stimmanteils in dem Eingangs-Audiosignal I ermittelt und mit entsprechenden Referenzwerten gespeicherter Sprecherprofile vergleicht. Die Sprachanalyseeinheit 16 ordnet dabei das jeweilige Fremd-Sprachintervall - wenn möglich - einem kompatiblen Sprecherprofil zu oder legt andernfalls ein neues Sprecherprofil an. Die Sprachanalyseeinheit 16 prüft hierbei auch, welche Sprecher in der aktuellen Hörsituation des Nutzers aktiv sind. Sprecherprofile, die über einen bestimmten Zeitraum (z.B. abhängig von der Gruppengröße der Sprecher und der Hörumgebung) keinem Fremd-Sprachintervall zugeordnet werden können, werden von der Sprachanalyseeinheit 16 gelöscht.

Auch für jeden der identifizierten Sprecher erfasst die Sprachanalyseeinheit 16 in einem Schritt 41 die Anfangs- und Endzeitpunkt der jeweils zugeordneten Fremd-Sprachintervalle, um die für das "Turn-Taking" relevanten Kenngrößen zu ermitteln.

In einem Schritt 42 prüft die Sprachanalyseeinheit 16, ob mehr als ein Sprecher in der aktuellen Hörsituation des Nutzers aktiv ist, d. h. ob mehr als eines der hinterlegten Sprecherprofile vorhanden bzw. aktiv ist.

In diesem Fall (Y) führt die Sprachanalyseeinheit 16 einen folgenden Schritt 44 durch. Andernfalls (N) springt der Signalprozessor 12 zu Schritt 30 zurück. Das weitere Verfahren wird somit nur in Multi-Sprecher-Umgebungen durchgeführt.

In dem Schritt 44 ermittelt die Sprachanalyseeinheit 16 anhand der in den Schritten 36 und 41 aufgezeichneten Anfangs- und Endzeitpunkte von Eigen- und Fremd-Sprachintervallen die für das Turn-Taking zwischen dem Benutzer und jedem identifizierten Sprecher relevanten Kenngrößen (TURNS, PAUSES, LAPSES, OVERLAPS, SWITCHES) und deren Länge bzw. zeitliche Häufigkeit.

In einem folgenden Schritt 46 nimmt die Sprachanalyseeinheit 16 die vorstehend beschriebene Interaktionsklassifizierung durch. Sie beurteilt hierbei, ob mehrere der vorstehend genannten Indizien für eine direkte Kommunikationsbeziehung zwischen dem Nutzer und dem Sprecher, dem das aktuell geprüfte Fremd-Sprachintervall zugeordnet ist, erfüllt sind.

Wenn dies der Fall ist (Y), klassifiziert die Sprachanalyseeinheit 16 diesen Sprecher als Hauptsprecher und vermerkt diese Klassifizierung in dem zugehörigen Sprecherprofil. Sie veranlasst dann in einem Schritt 48 für das betreffende Fremd-

Sprachintervall die Einstellung von Hörgeräteparametern, die für die Verarbeitung von Stimmanteilen eines Hauptsprechers optimiert sind, insbesondere
- eine vergleichsweise hohe Verstärkung des Eingangs-Audiosignals I,
- eine Vergleichsweise geringe dynamische Kompression, und
- eine vergleichsweise starke richtungsabhängige Dämpfung (Beamforming) des Eingangs-Audiosignals I, wobei die Richtkeule des Beamforming-Algorithmus insbesondere entsprechend der Orientierung dieses Hauptsprechers zum Kopf des Nutzers ausgerichtet wird.

Andernfalls (N) klassifiziert die Sprachanalyseeinheit 16 diesen Sprecher als Nebensprecher und vermerkt ebenfalls diese Klassifizierung in dem zugehörigen Sprecherprofil. Sie veranlasst dann in einem Schritt 50 für das betreffende Fremd-Sprachintervall die Einstellung von Hörgeräteparametern, die für die Verarbeitung von Stimmanteilen eines Nebensprechers optimiert sind, insbesondere
- eine vergleichsweise geringe Verstärkung des Eingangs-Audiosignals I,
- eine vergleichsweise starke dynamische Kompression, und
- eine vergleichsweise geringe richtungsabhängige Dämpfung.

In beiden Fällen, also sowohl nach Schritt 48 als auch nach Schritt 50, kehrt der Signalprozessor 12 anschließend zu Schritt 30 zurück.

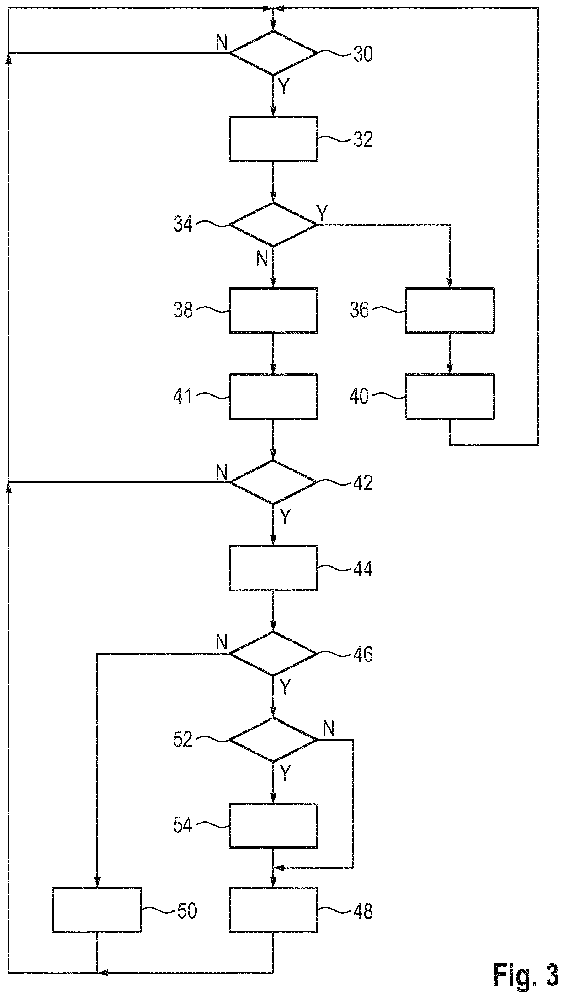

In Fig. 3 ist eine Variante des Verfahrens aus Fig. 2 dargestellt. Das Verfahren gemäß Fig. 3 entspricht in weiten Teilen dem vorstehend anhand von Fig. 2 beschriebenen Verfahren. Es umfasst insbesondere die vorstehend beschriebenen Schritte 30 bis 50. Zusätzlich umfasst das Verfahren gemäß Fig. 3 aber zwei zusätzliche Schritte 52 und 54.

Der Schritt 52 wird nach der Interaktionsklassifizierung (Schritt 46) durchgeführt, wenn dort der Sprecher, dem das aktuelle Fremd-Sprachintervall zugeordnet ist, als Hauptsprecher klassifiziert wurde.

Die Sprachanalyseeinheit 16 prüft in diesem Fall anhand der für das Turn-Taking relevanten Kenngrößen, anhand der Lautstärke und der Fundamentalfrequenz der eigenen Stimme des Nutzers in einem vorausgegangenen Eigen-Sprachintervall, der Lautstärke und der Fundamentalfrequenz der Stimme des Sprechers in dem aktuellen Fremd-Sprachintervall sowie optional anhand der von der Physiologieanalyseeinheit 18 ausgewerteten Signale des oder jedes Biosensors 19, ob eine schwierige (d. h. mit erhöhter Höranstrengung und/oder mit Frustration des Nutzers verbundene) Hörsituation vorliegt.

Falls dies der Fall ist (Y), veranlasst die Sprachanalyseeinheit 16 in dem Schritt 54 eine Anpassung der in Schritt 48 einzustellenden Signalverarbeitungsparameter. Beispielsweise erhöht die Sprachanalyseeinheit 16 den auf die Bearbeitung von Stimmanteilen eines Hauptsprechers anzuwendenden Verstärkungsfaktor oder erniedrigt die in diesem Fall anzuwendende dynamische Kompression.

Andernfalls (N), also wenn die im Schritt 52 vorgenommene Prüfung keine Anzeichen für eine schwierige Hörsituation ergibt, wird der Schritt 54 in der Verfahrensdurchführung übersprungen.

Durch die Schritte 52 und 54 werden somit die Signalverarbeitungsparameter in einer Art Regelschleife bedarfsgerecht angepasst, um dem Nutzer in schwierigen Hörsituationen das Verständnis des oder der direkten Kommunikationspartner (Hauptsprecher) zu erleichtern. Die im Schritt 54 vorgenommenen Anpassungen an den Signalverarbeitungsparameter werden sukzessive zurückgenommen, wenn die schwierige Hörsituation beendet ist und somit die in Schritt 52 vorgenommene Prüfung über einen bestimmten Zeitraum ein negatives Resultat ergibt.

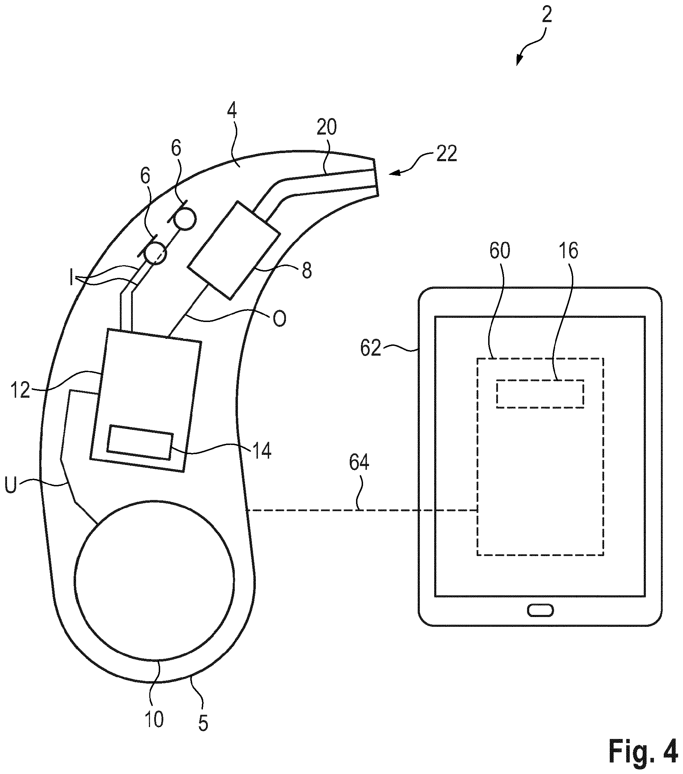

Fig. 4 zeigt eine weitere Ausführungsform des Hörsystems 2, in der dieses zusätzlich zu dem Hörgerät 4 (oder zwei Hörgeräten dieser Art zur Versorgung der beiden Ohren des Nutzers) eine Steuer-Software umfasst. Diese Steuer-Software ist nachfolgend als Hör-App 60 bezeichnet. Die Hör-App 60 ist in dem in Fig. 4 dargestellten Beispiel auf einem Smartphone 62 installiert. Das Smartphone 62 ist dabei selbst nicht Teil des Hörsystems 2. Vielmehr wird das Smartphone 62 von der Hör-App 60 lediglich als Ressource für Speicherplatz und Rechenleistung genutzt.

Das Hörgerät 4 und die Hör-App 62 tauschen im Betrieb des Hörsystems 2 Daten über eine drahtlose Datenübertragungsverbindung 64 aus. Die Datenübertragungsverbindung 64 beruht beispielsweise auf dem Bluetooth-Standard. Die Hör-App 62 greift hierbei auf einen Bluetooth-Transceiver des Smartphones 62 zu, um Daten von dem Hörgerät 4 zu empfangen und Daten an dieses zusenden. Das Hörgerät 4 umfasst seinerseits einen Bluetooth-Transceiver, um Daten an die Hör-App 60 zusenden und Daten von dieser App zu empfangen.

In der Ausführung gemäß Fig. 4 sind Teile der für die Durchführung des Verfahrens gemäß Fig. 2 oder Fig. 3 erforderlichen Software-Komponenten nicht in dem Signalprozessor 12 implementiert, sondern vielmehr in der Hör-App 60. Beispielsweise sind in der Ausführungsform gemäß Fig. 4 die Sprachanalyseeinheit 16 oder Teile davon in der Hör-App 60 implementiert.

Die Erfindung wird an den vorstehend beschriebenen Ausführungsbeispielen besonders deutlich, ist gleichwohl auf diese Ausführungsbeispiele aber nicht beschränkt. Vielmehr können weitere Ausführungsformen der Erfindung von dem Fachmann aus den Ansprüchen und der vorstehenden Beschreibung abgeleitet werden.

### Bezugszeichenliste

- 2: Hörsystem
- 4: Hörgerät
- 5: Gehäuse
- 6: Mikrofon
- 8: Hörer
- 10: Batterie
- 12: Signalprozessor
- 14: (Stimmerkennungs-)Einheit
- 16: (Sprachanalyse-)Einheit
- 18: Physiologieanalyseeinheit
- 19: Biosensor
- 20: Schallkanal
- 22: Spitze
- 30: Schritt
- 32: Schritt
- 34: Schritt
- 36: Schritt
- 38: Schritt
- 40: Schritt
- 41: Schritt
- 42: Schritt
- 44: Schritt
- 46: Schritt
- 48: Schritt
- 50: Schritt
- 52: Schritt
- 54: Schritt
- 60: Hör-App
- 62: Smartphone
- 64: Datenübertragungsverbindung
- U: Versorgungsspannung
- I: (Eingangs-)Audiosignal
- O: (Ausgangs-)Audiosignal

## Patentansprüche

1. Verfahren zum Betrieb eines Hörsystems (2) zur Unterstützung des Hörvermögens eines Nutzers, mit mindestens einem im oder am Ohr des Nutzers getragenen Hörinstrument (4),
- wobei mittels eines Eingangswandlers des Hörinstruments (4) ein Schallsignal aus einer Umgebung des Hörinstruments (4) aufgenommen wird,
- wobei das aufgenommene Schallsignal in einem Signalverarbeitungsschritt zur Unterstützung des Hörvermögens des Nutzers modifiziert wird,
- wobei das modifizierte Schallsignal mittels eines Ausgangswandlers (8) des Hörinstruments (4) ausgegeben wird,
- wobei in einem Analyseschritt
-- Fremd-Sprachintervalle erkannt werden, in denen das aufgenommene Schallsignal Sprache eines von dem Nutzer verschiedenen Sprechers enthält,
-- in erkannten Fremd-Sprachintervallen verschiedener Sprecher identifiziert werden, und wobei jedes Fremd-Sprachintervall dem Sprecher, der in diesem Fremd-Sprachintervall spricht, zugeordnet wird,
**dadurch gekennzeichnet,**
- **dass** für jedes erkannte Fremd-Sprachintervall der zugeordnete Sprecher im Zuge einer Interaktionsklassifizierung danach klassifiziert wird, ob dieser Sprecher als Hauptsprecher mit dem Nutzer in einer direkten Kommunikationsbeziehung steht oder ob dieser Sprecher als Nebensprecher nicht mit dem Nutzer in einer direkten Kommunikationsbeziehung steht,
- **dass** in dem Signalverarbeitungsschritt die Modifikation der erkannten Fremd-Sprachintervalle in Abhängigkeit von der Interaktionsklassifizierung erfolgt, und
- **dass** in dem Signalverarbeitungsschritt
-- Fremd-Sprachintervalle des oder jedes als Hauptsprecher klassifizierten Sprechers in höherem Maße dynamisch komprimiert werden als Fremd-Sprachintervalle des oder jedes als Nebensprecher klassifizierten Sprechers, und/oder,
-- Fremd-Sprachintervalle des oder jedes als Hauptsprecher klassifizierten Sprechers einer geringeren Geräuschreduktion und/oder Rückkopplungsunterdrückung unterzogen werden als Fremd-Sprachintervalle des oder jedes als Nebensprecher klassifizierten Sprechers.

2. Verfahren nach Anspruch 1,
wobei in dem Analyseschritt für mindestens einen identifizierten Sprecher eine räumliche Orientierung dieses Sprechers relativ zu dem Kopf des Nutzers erfasst und bei der Interaktionsklassifizierung berücksichtigt wird.

3. Verfahren nach Anspruch 1 oder 2,
- wobei in dem Analyseschritt auch Eigen-Sprachintervalle erkannt werden, in denen das aufgenommene Schallsignal Sprache des Nutzers enthält,
- wobei für mindestens einen identifizierten Sprecher eine zeitliche Abfolge der zugeordneten Fremd-Sprachintervalle und der erkannten Eigen-Sprachintervalle erfasst und bei der Interaktionsklassifizierung berücksichtigt wird.

4. Verfahren nach einem der Ansprüche 1 bis 3,
wobei in dem Analyseschritt für jedes erkannte Fremd-Sprachintervall eine gemittelte Lautstärke und/oder ein Signal-Rausch-Verhältnis ermittelt und bei der Interaktionsklassifizierung berücksichtigt werden.

5. Verfahren nach einem der Ansprüche 1 bis 4,
wobei in dem Analyseschritt für jedes erkannte Fremd-Sprachintervall eine physiologische Reaktion des Nutzers erfasst und bei der Interaktionsklassifizierung berücksichtigt wird.

6. Verfahren nach einem der Ansprüche 1 bis 5,
wobei in dem Signalverarbeitungsschritt
- Fremd-Sprachintervalle des oder jedes als Hauptsprecher klassifizierten Sprechers in höherem Maße verstärkt werden als Fremd-Sprachintervalle des oder jedes als Nebensprecher klassifizierten Sprechers, und/oder
- Fremd-Sprachintervalle des oder jedes als Hauptsprecher klassifizierten Sprechers in stärkerem Maße einer richtungsabhängigen Dämpfung unterzogen werden als Fremd-Sprachintervalle des oder jedes als Nebensprecher klassifizierten Sprechers.

7. Verfahren nach einem der Ansprüche 1 bis 6,
wobei für den oder jeden als Hauptsprecher klassifizierten Sprecher ein Maß für die Kommunikationsqualität erfasst wird, das charakteristisch für den Erfolg der Informationsübermittlung zwischen diesem Hauptsprecher und dem Nutzer und der damit verbundenen Höranstrengung des Nutzers ist, und wobei die in dem Signalverarbeitungsschritt die Modifikation der diesem Hauptsprecher zugeordneten Fremd-Sprachintervalle in Abhängigkeit von dem Maß für die Kommunikationsqualität erfolgt.

8. Verfahren nach Anspruch 7,
wobei eine räumliche Orientierung des oder jedes Hauptsprechers relativ zu dem Kopf des Nutzers erfasst wird und wobei das Maß für die Kommunikationsqualität anhand dieser räumlichen Orientierung ermittelt wird.

9. Verfahren nach Anspruch 7 oder 8,
wobei Eigen-Sprachintervalle erkannt werden, in denen das aufgenommene Schallsignal Sprache des Nutzers enthält, wobei für den oder jeden Hauptsprecher eine zeitliche Abfolge der zugeordneten Fremd-Sprachintervalle und der erkannten Eigen-Sprachintervalle erfasst wird, und wobei das Maß für die Kommunikationsqualität anhand dieser zeitlichen Abfolge ermittelt wird.

10. Verfahren nach einem der Ansprüche 7 bis 9,
wobei für jedes Fremd-Sprachintervall des oder jedes Hauptsprechers eine physiologische Reaktion des Nutzers erfasst wird und wobei das Maß für die Kommunikationsqualität anhand dieser physiologischen Reaktion ermittelt wird.

11. Verfahren nach einem der Anspruch 7 bis 10,
wobei für mindestens ein Eigen-Sprachintervall eine Spektraleigenschaft der Stimme des Nutzers ermittelt wird und/oder wobei für mindestens ein dem Hauptsprecher zugeordneten Fremd-Sprachintervall eine Spektraleigenschaft der Stimme des Hauptsprechers ermittelt wird, und wobei das Maß für die Kommunikationsqualität anhand der Spektraleigenschaft der Stimme des Nutzers bzw. anhand der Spektraleigenschaft der Stimme des Hauptsprechers ermittelt wird.

12. Verfahren nach einem der Ansprüche 7 bis 11,
wobei für mindestens ein Eigen-Sprachintervall eine Lautstärke ermittelt wird und/oder wobei für mindestens ein dem Hauptsprecher zugeordneten Fremd-Sprachintervall eine Lautstärke ermittelt wird, und wobei das Maß für die Kommunikationsqualität anhand dieser Lautstärke des Eigen-Sprachintervalls bzw. Fremd-Sprachintervalls ermittelt wird.

13. Verfahren nach einem der Ansprüche 7 bis 12,
wobei für mindestens ein Eigen-Sprachintervall ein Sprachrhythmus ermittelt wird und/oder wobei für mindestens ein dem Hauptsprecher zugeordnetes Fremd-Sprachintervall ein Sprachrhythmus ermittelt wird, und wobei das Maß für die Kommunikationsqualität anhand dieses Sprachrhythmus des Nutzers bzw. des Hauptsprechers ermittelt wird.

14. Hörsystem (2) zur Unterstützung des Hörvermögens eines Nutzers mit mindestens einem im oder am Ohr des Nutzers getragenen Hörinstrument (4), wobei das Hörinstrument (4) umfasst:
- einen Eingangswandler (6) zur Aufnahme eines Schallsignals aus einer Umgebung des Hörinstruments (4),
- eine Signalverarbeitungseinheit (12) zur Modifizierung des aufgenommenen Schallsignals, um das Hörvermögen des Nutzers zu unterstützen, und
- einen Ausgangswandler (8) zur Ausgabe des modifizierten Schallsignals, wobei das Hörsystem (2) zur automatischen Durchführung des Verfahrens nach einem der Ansprüche 1 bis 13 eingerichtet ist.

## Claims

1. A method for operating a hearing system (2) for assisting the hearing of a user, having at least one hearing instrument (4) worn in or on the ear of the user,
- wherein a sound signal from an environment of the hearing instrument (4) is recorded by means of an input transducer of the hearing instrument (4),
- wherein the recorded sound signal is modified in a signal processing step to assist the hearing of the user,
- wherein the modified sound signal is output by means of an output transducer (8) of the hearing instrument (4),
- wherein in an analysis step
- foreign speech intervals are recognized, in which the recorded speech signal contains speech of a speaker different from the user,
- various speakers are identified and recognized foreign speech intervals, and wherein each foreign speech interval is assigned to the speaker who speaks in this foreign speech interval,
**characterized in that**
- for each recognized foreign speech interval, the assigned speaker is classified in the course of an interaction classification as to whether this speaker is in a direct communication relationship with the user as a main speaker or whether this speaker is not in a direct communication relationship with the user as a secondary speaker,
- in the signal processing step, the modification of the recognized foreign speech intervals takes place depending on the interaction classification, and
- in the signal processing step
- foreign speech intervals of the or each speaker classified as a main speaker are dynamically compressed to a greater extent than foreign speech intervals of the or each speaker classified as a secondary speaker, and/or
- foreign speech intervals of the or each speaker classified as a main speaker are subjected to last noise reduction and/or feedback suppression than foreign speech intervals of the or each speaker classified as a secondary speaker.

2. The method as claimed in claim 1,
wherein in the analysis step, for at least one identified speaker, a spatial orientation of this speaker relative to the head of the user is detected and taken into consideration in the interaction classification.

3. The method as claimed in claim 1 or 2,
- wherein in the analysis step, own speech intervals are also recognized, in which the recorded sound signal contains speech of the user,
- wherein for the at least one identified speaker, a chronological sequence of the assigned foreign speech intervals and the recognized own speech intervals is detected and taken into consideration in the interaction classification.

4. The method as claimed in any one of claims 1 to 3,
wherein in the analysis step, for each recognized foreign speech interval, an average volume and/or a signal-to-noise ratio is ascertained and taken into consideration in the interaction classification.

5. The method as claimed in any one of claims 1 to 4,
wherein in the analysis step, for each recognized foreign speech interval, a physiological reaction of the user is detected and taken into consideration in the interaction classification.

6. The method as claimed in any one of claims 1 to 5,
wherein in the signal processing step
- foreign speech intervals of the or each speaker classified as a main speaker are amplified to a greater extent than foreign speech intervals of the or each speaker classified as a secondary speaker and/or
- foreign speech intervals of the or each speaker classified as a main speaker are subjected to direction-dependent damping to a greater extent than foreign speech intervals of the or each speaker classified as a secondary speaker.

7. The method as claimed in any one of claims 1 to 6,
wherein for the or each speaker classified as a main speaker, a measure of the communication quality is detected, which is characteristic for the success of the information transmission between this main speaker and the user and the hearing exertion of the user connected thereto, and wherein in the signal processing step, the modification of the foreign speech intervals assigned to this main speaker takes place depending on the measure of the communication quality.

8. The method as claimed in claim 7,
wherein a spatial orientation of the or each main speaker relative to the head of the user is detected and wherein the measure of the communication quality is ascertained on the basis of this spatial orientation.

9. The method as claimed in claim 7 or 8,
wherein own speech intervals are recognized, in which the recorded sound signal contains speech of the user, wherein for the or each main speaker, a chronological sequence of the assigned foreign speech intervals and the recognized own speech intervals is detected, and wherein the measure of the communication quality is ascertained on the basis of this chronological sequence.

10. The method as claimed in any one of claims 7 to 9,
wherein for each foreign speech interval of the or each main speaker, a physiological reaction of the user is detected and wherein the measure of the communication quality is ascertained on the basis of this physiological reaction.

11. The method as claimed in any one of claims 7 to 10,
wherein for at least one own speech interval, a spectral property of the voice of the user is ascertained and/or wherein for at least one foreign speech interval assigned to the main speaker, a spectral property of the voice of the main speaker is ascertained, and wherein the measure of the communication quality is ascertained on the basis of the spectral property of the voice of the user or on the basis of the spectral property of the voice of the main speaker.

12. The method as claimed in any one of claims 7 to 11,
wherein for at least one own speech interval, a volume is ascertained and/or wherein for at least one foreign speech interval assigned to the main speaker, a volume is ascertained, and wherein the measure of the communication quality is ascertained on the basis of this volume of the own speech interval or foreign speech interval.

13. The method as claimed in any one of claims 7 to 12,
wherein for at least one own speech interval, a speech rhythm is ascertained and/or wherein for at least one foreign speech interval assigned to the main speaker, speech or the is ascertained, and wherein the measure of the communication quality is ascertained on the basis of this speech rhythm of the user or the main speaker.

14. A hearing system (2) for assisting the hearing of a user having at least one hearing instrument (4) worn in or on the ear of the user, wherein the hearing instrument (4) comprises:
- an input transducer (6) for recording a sound signal from an environment of the hearing instrument (4),
- a signal processing unit (12) for modifying the recorded sound signal to assist the hearing of the user, and
- an output transducer (8) for outputting the modified sound signal,
wherein the hearing system (2) is configured to automatically perform the method as claimed in any one of claims 1 to 13.

## Revendications

1. Procédé pour faire fonctionner un système auditif (2) destiné à aider un utilisateur à entendre, comprenant au moins un instrument auditif (4) porté dans ou sur l'oreille de l'utilisateur,
- un signal sonore provenant d'un environnement de l'instrument auditif (4) étant capté au moyen d'un transducteur d'entrée de l'instrument auditif (4),
- le signal sonore enregistré est modifié dans une étape de traitement du signal pour soutenir la capacité auditive de l'utilisateur,
- le signal sonore modifié est émis au moyen d'un transducteur de sortie (8) de l'instrument auditif (4),
- dans une étape d'analyse,
-- des intervalles de langue étrangère sont reconnus, dans lesquels le signal sonore enregistré contient la langue d'un interlocuteur différent de l'utilisateur,
**--** des intervalles de langue étrangère reconnus de différents interlocuteurs sont identifiés, et chaque intervalle de langue étrangère est attribué à l'interlocuteur qui parle dans cet intervalle de langue étrangère,
**caractérisé**
- **en ce que** pour chaque intervalle de langue étrangère reconnu, l'interlocuteur associé est classé au cours d'une classification d'interaction selon que cet interlocuteur est l'interlocuteur principal qui entretient une relation de communication directe avec l'utilisateur ou que cet interlocuteur est l'interlocuteur secondaire qui n'entretient pas de relation de communication directe avec l'utilisateur,
- **en ce que**, dans l'étape de traitement du signal, la modification des intervalles de langue étrangère reconnus s'effectue en fonction de la classification d'interaction, et
- **en ce que**, dans l'étape de traitement du signal,
-- les intervalles de langue étrangère de l'interlocuteur, ou de chaque interlocuteur, classé comme interlocuteur principal sont compressés de manière plus dynamique que les intervalles de langue étrangère de l'interlocuteur, ou de chaque interlocuteur, classé comme interlocuteur secondaire, et/ou
-- les intervalles de langue étrangère de l'interlocuteur principal ou de chaque interlocuteur principal sont soumis à une réduction du bruit et/ou à une suppression du Larsen plus faible que les intervalles de langue étrangère de l'interlocuteur secondaire ou de chaque interlocuteur secondaire.

2. Procédé selon la revendication 1,
dans lequel, dans l'étape d'analyse, une orientation spatiale de cet interlocuteur est enregistrée par rapport à la tête de l'utilisateur pour au moins un interlocuteur identifié et est prise en compte lors de la classification de l'interaction.

3. Procédé selon la revendication 1 ou la revendication 2,
- dans lequel, dans l'étape d'analyse, les intervalles de langue maternelle sont également détectés, dans lesquels le signal sonore enregistré contient la parole de l'utilisateur,
- pour au moins un interlocuteur identifié, une séquence temporelle des intervalles de langue étrangère attribués et des intervalles de langue maternelle reconnus est enregistrée et prise en compte dans la classification de l'interaction.

4. Procédé selon l'une des revendications 1 à 3,
dans lequel, dans l'étape d'analyse, un volume sonore moyen et/ou un rapport signal/bruit sont déterminés pour chaque intervalle de langue étrangère reconnu et pris en compte lors de la classification des interactions.

5. Procédé selon l'une des revendications 1 à 4,
dans lequel, dans l'étape d'analyse, une réaction physiologique de l'utilisateur est enregistrée pour chaque intervalle de langue étrangère reconnu et pris en compte lors de la classification des interactions.

6. Procédé selon l'une des revendications 1 à 5,
dans lequel, dans l'étape de traitement du signal
- les intervalles de langue étrangère de l'interlocuteur, ou de chaque interlocuteur, classé comme interlocuteur principal sont amplifiés dans une plus grande mesure que les intervalles de langue étrangère de l'interlocuteur, ou de chaque interlocuteur, classé comme interlocuteur secondaire, et/ou
- les intervalles de langue étrangère de l'interlocuteur, ou de chaque interlocuteur, classé comme interlocuteur principal sont soumis à une atténuation dépendante de la direction dans une plus grande mesure que les intervalles de langue étrangère de l'interlocuteur, ou de chaque interlocuteur, classé comme interlocuteur secondaire.

7. Procédé selon l'une des revendications 1 à 6,
dans lequel, pour l'interlocuteur, ou chaque interlocuteur, classé comme interlocuteur principal, une mesure de la qualité de la communication est enregistrée, qui est caractéristique du succès de la transmission d'informations entre cet interlocuteur principal et l'utilisateur et de l'effort d'écoute de l'utilisateur qui y est associé, et dans lequel la modification des intervalles de langue étrangère attribués à cet interlocuteur principal dans l'étape de traitement du signal s'effectue en fonction de la mesure de la qualité de la communication.

8. Procédé selon la revendication 7,
dans lequel une orientation spatiale de l'interlocuteur principal ou de chaque interlocuteur principal par rapport à la tête de l'utilisateur est détectée et dans lequel la mesure de la qualité de la communication est déterminée en fonction de cette orientation spatiale.

9. Procédé selon la revendication 7 ou la revendication 8,
dans lequel des intervalles de langue maternelle sont détectés, dans lesquels le signal sonore enregistré contient la parole de l'utilisateur, une séquence temporelle des intervalles de langue étrangère attribués et des intervalles de langue maternelle détectés étant enregistrée pour l'interlocuteur principal ou pour chaque interlocuteur principal, et la mesure de la qualité de la communication étant déterminée en fonction de cette séquence temporelle.

10. Procédé selon l'une des revendications 7 à 9,
dans lequel une réaction physiologique de l'utilisateur est enregistrée pour chaque intervalle de langue étrangère de l'interlocuteur principal ou de chaque interlocuteur principal et la mesure de la qualité de la communication est déterminée en fonction de cette réaction physiologique.

11. Procédé selon l'une des revendications 7 à 10, dans lequel une propriété spectrale de la voix de l'utilisateur est déterminée pour au moins un intervalle de langue maternelle et/ou dans lequel une propriété spectrale de la voix de l'interlocuteur principal est déterminée pour au moins un intervalle de langue étrangère attribué à l'interlocuteur principal, et dans lequel la mesure de la qualité de la communication est déterminée sur la base de la propriété spectrale de la voix de l'utilisateur ou sur la base de la propriété spectrale de la voix de l'interlocuteur principal.

12. Procédé selon l'une des revendications 7 à 11, dans lequel un volume sonore est déterminé pour au moins un intervalle de langue maternelle et/ou dans lequel un volume sonore est déterminé pour au moins un intervalle de langue étrangère attribué à l'interlocuteur principal, et dans lequel la mesure de la qualité de la communication est déterminée sur la base de ce volume sonore de l'intervalle de langue maternelle ou de l'intervalle de langue étrangère.

13. Procédé selon l'une des revendications 7 à 12, dans lequel un rythme vocal est déterminé pour au moins un intervalle de langue maternelle et/ou dans lequel un rythme vocal est déterminé pour au moins un intervalle de langue étrangère attribué à l'interlocuteur principal, et dans lequel la mesure de la qualité de la communication est déterminée sur la base de ce rythme vocal de l'utilisateur ou de l'interlocuteur principal.

14. Système auditif (2) pour aider un utilisateur à entendre, comprenant au moins un appareil auditif (4) porté dans ou sur l'oreille de l'utilisateur, l'appareil auditif (4) comprenant :
- un transducteur d'entrée (6) pour recevoir un signal sonore provenant de l'environnement de l'appareil auditif (4),
- une unité (12) de traitement du signal pour modifier le signal sonore enregistré afin de soutenir la capacité auditive de l'utilisateur, et
- un transducteur de sortie (8) pour émettre le signal sonore modifié, le système auditif (2) étant conçu pour mettre automatiquement en œuvre le procédé selon l'une des revendications 1 à 13.
